# EUROPEAN PATENT SPECIFICATION

(11) **EP 1 902 760 B1**
(45) Date of publication and mention of the grant of the patent: **05.11.2014**
(21) Application number: 07116830.6
(22) Date of filing: 20.09.2007
(51) Int. Cl.: A63F 13/219, A63F 13/90, A63F 13/98

(54) **Storage medium and game device**
Speichermedium und Spielvorrichtung
Support de stockage et dispositif de jeux

(30) Priority: 20.09.2006 JP 2006255111
(43) Date of publication of application: 26.03.2008
(73) Proprietor: BANDAI NAMCO Games Inc., Shinagawa-Ku, Tokyo (JP)
(72) Inventor: Satsukawa, Takashi, Tokyo 140-8590 (JP); Shimuzu, Takehiro, Tokyo 140-8590 (JP); Saito, Shigemasa, Tokyo 140-8590 (JP); Kuroda, Masanao, Tokyo 140-8590 (JP)
(74) Representative: Newstead, Michael John

(56) References cited:
- EP-A- 0 550 265
- EP-A- 0 852 961
- US-A1- 2002 082 090

## Description

### BACKGROUND OF THE INVENTION

The present invention relates to a storage medium which stores a program which causes a computer to control a game character disposed in a game space and a weapon item possessed by the game character and generate an image of the game space viewed from a virtual camera to control a game process and the like.

In recent years, consumer game devices such as Playstation (registered trademark), GameCube (registered trademark), and XBox (registered trademark) have become remarkably popular. These consumer game devices are generally sold as a set of a game device main body (computer) and a game controller provided as an accessory, wherein the game device main body includes a reader which reads a game program from an optical medium such as a CD-ROM or a DVD-ROM and a control unit which performs calculations necessary for game play.

The game controller provided to the consumer game device is designed to be universal and achieve excellent operability so that the player can play various types of games. The game controller generally has holding sections provided on the right and left ends, and includes input devices such as a direction input arrow key provided on the left upper surface and a push button provided on the right upper surface. The player holds the right and left holding sections with both hands in the same manner as in the case of holding a steering wheel, and inputs a game operation. The game controller may include an analog lever instead of the arrow key. A game device incorporating such a controller is known from US-A1-2002/0082090 for example.

As one type of consumer game device, a toy is known which has an outward appearance similar to that of a gun, such as a grip, a trigger, and a muzzle, and includes a microphone provided in the muzzle and a display which displays a game screen (see Japanese Utility Model Registration No. 3046095, for example). When the player holds the toy in the same manner as in the case of holding a gun and pulls the trigger while aiming the muzzle at a sound source, sound from the sound source is collected by the microphone, and an image of a monster is displayed on the display depending on the collected sound. The player can enjoy the game in which the player aims at the monster by operating the arrow key provided near the grip and pulls the trigger at an appropriate timing to capture the monster which lurks in the sound source. Since the toy has an outward appearance and an operation system imitating a gun, the player can enjoy playing the game just like hunting with a gun.

Another game device which incorporates a controller with the appearance of a gun is known from EP-A2-0550265.

In recent years, a first-person shooter (FPS) game has been known as one type of video game. The term "FPS game" refers to one type of game in which the player shoots an enemy character using a weapon such as a gun while watching a game screen on which a game world is displayed which is viewed from the view point (first-person view point) of a player's character operated by the player. An arcade game device is known which allows the player to enjoy the FPS game (see JP-A-11-169557, for example).

The FPS game has been generally played using a personal computer and a large arcade game device. Since many users have strongly demanded the capability of playing the FPS game using a consumer game device, an FPS game has been developed for some consumer game devices.

In the FPS game, the player is put in a situation in which the enemy may attack at any time, as if the player were in the front line on a battlefield. A typical action of the FPS game is represented by a series of operations in which the player searches for an enemy by causing the line of sight of the character in the game to move in the upward/downward and right/left directions while causing the character to move in the forward/backward and left/right directions in the game space, and attacks (shoots with a gun in many cases) the enemy found within the field of view. Therefore, a game controller is required which allows the player to intuitively and smoothly input such a series of operations in order to allow the player to fully enjoy playing the FPS game.

However, the controllers provided to the consumer game devices are designed to be universally used for various games, as described above. Therefore, the sense of direction input when the player holds the game controller rarely coincides with the sense of direction the player feels when playing the FPS game, whereby the player must play the game while translating the sense of direction in the real world into the sense of direction in the game world. As a result, an inexperienced player may be upset when a situation occurs in which the character unexpectedly encounters an enemy.

### SUMMARY

According to one aspect of the invention, there is provided a program for causing a computer to control a game character disposed in a game space and an item possessed by the game character and generate an image of the game space viewed from a virtual camera to control a game process, the image in use being displayed on a game screen, the computer being connected via communication with a game controller which has a specific shape held with both hands during use and includes: a barrel equivalent portion; a front-side holding section and a rear-side holding section respectively provided in a front portion and a rear portion of the game controller, the front-side holding section being held with a right or left hand and the rear-side holding section being held with the other hand; a trigger provided within a range in which the forefinger of the hand holding the rear-side holding section reaches the trigger; a front-side direction input section operated by a finger of the hand holding the front-side holding section; a rear-side direction input section operated by a finger of the hand holding the rear-side holding section; an operation signal output section which outputs operation signals of the front-side direction input section, the rear-side direction input section, and the trigger corresponding to inputs performed using the front-side direction input section, the rear-side direction input section, and the trigger, and a detection mechanism which detects position coordinates on the game screen indicated by a barrel direction of the barrel equivalent portion, the detection mechanism including an image detection section, the program causing the computer to function as: an operation signals input section which controls the communication with the game controller and to which the operation signal is input; a character control section which controls the game character based on the operation signal of the front-side direction input section anc9/or the rear-side direction input section; an actuation control section which controls actuation of the item based on the operation signal of the trigger; a pointer marker display control section which displays a pointer marker on the generated image of the game space and changes a display position of the pointer marker based on the detection result of the detection mechanism; and a marker position camera control section which controls a line-of-sight direction of the virtual camera when the pointer marker has been positioned within a specific peripheral range of the game image.

According to another aspect of the invention, there is provided a game device which comprises a game controlter and executes a game by controlling a game character disposed in a game space and an item possessed by the game character and generating an image of the game space viewed from a virtual camera, the image in use being displayed on a game screen, wherein the game controller has a specific shape held with both hands during use and comprises: a barrel equivalent portion; a front-side holding section and a rear-side holding section respectively provided in a front portion and a rear portion of the game controller, the front-side holding section being held with a right or left hand and the rear-side holding section being held with the other hand; a trigger provided within a range in which the forefinger of the hand holding the rear-side holding section reaches the trigger; a front-side direction input section operated by a finger of the hand holding the front-side holding section; a rear-side direction input section operated by a finger of the hand holding the rear-side holding section; an operation signal output section which outputs operation signals of the front-side direction input section, the rear-side direction input section, and the trigger corresponding to inputs performed using the front-side direction input section, the rear-side direction input section, and the trigger, and a detection mechanism which detects position coordinates on the game screen indicated by a barrel direction of the barrel equivalent portion, the detection mechanism including an image detection section, and wherein the game device comprises: a character control section which controls the game character based on the operation signal of the front-side direction input section and/or the rear-side direction input section output from the game controller; a weapon actuation control section which controls actuation of the item based on the operation signal of the trigger output from the game controller; a pointer marker display control section which displays a pointer marker on the generated image of the game space and changes a display position of the pointer marker based on the detection result of the detection mechanism; and a marker position camera control section which controls a line-of-sight direction of the virtual camera when the pointer marker has been positioned within a specific peripheral range of the game image.

According to another aspect of the invention, there is provided a computer-readable storage medium storing the program according to the first aspect.

### BRIEF DESCRIPTION OF THE SEVERAL VIEWS OF THE DRAWING

FIG. 1 is a system configuration diagram showing a configuration example of a consumer game device.
FIG. 2 is a schematic view illustrative of the function of a gun-type controller as a pointer.
FIGS. 3A and 3B are external views illustr-ative of the configuration of the gun-type controller.
FIG. 4 is an oblique external view showing an example of a player's character.
F1G. 5 is a view showing an example of assignment of control to an operation input performed using the gun-type controller.
FIG. 6 is a functional block diagram showing an example of a functional configuration.
FIG. 7 is a functional block diagram showing an operation input section.
FIG. 8 is a data configuration diagram showing the data configuration of player's character control data.
FIG. 9 is a flowchart illustrative of the flow of a process.
FIG 10 is a flowchart illustrative of the flow of a main lever input process.
FIG 11 is a flowchart illustrative of the flow of a sublever input process.
FIG 12 is a flowchart illustrative of the flow of an automatic view point moving process.
FIG 13 is a schematic view illustrative of the concept of the automatic view point moving process.
FIGS. 14A and 14B are views showing a screen display example of a change in the focal length of a view point camera.
FIGS. 15A and 15B are views showing a screen display example of a weapon selection operation.
FIGS. 16A and 16B are views showing a screen display example of a change in view point direction.
FIGS. 17A and 17B are views showing a screen display example of a moving operation of a player's character PC in upward/downward and right/left directions.
FIGS. 18A and 18B are views showing a screen display example of a moving operation of the player's character PC in forward/backward and right/left directions.
FIGS. 19A and 19B are views showing a screen display example of the automatic view point moving process.
FIG 20 is a view illustrative of an example of a hardware configuration.
FIG 21 is a view showing a modification of assignment of control to an operation input performed using the gun-type controller.
FIG 22 is a view showing another modification of assignment of control to an operation input performed using the gun-type controller.
FIG 23 is a view showing a further modification of assignment of control to an operation input performed using the gun-type controller.
FIG 24 is a system configuration diagram illustrative of a configuration example of an arcade game device to which the invention is applied.

### DETAILED DESCRIPTION OF THE EMBODIMENT

The invention can achieve an intuitive and smooth operation input suitable for playing a game (e.g. FPS game) which requires that the player input the view point direction and the moving direction of the player's character.

According to one embodiment of the invention, there is provided a computer-readable storage medium storing a program for causing a computer to control a game character disposed in a game space and an item possessed by the game character and generate an image of the game space viewed from a virtual camera to control a game process, the computer being connected via communication with a game controller which has a specific shape held with both hands during use and includes:
a barrel equivalent portion;
a front-side holding section and a rear-side holding section respectively provided in a front portion and a rear portion of the game controller, the front-side holding section being held with a right or left hand and the rear-side holding section being held with the other hand;
a trigger provided within a range in which the forefinger of the hand holding the rear-side holding section reaches the trigger;
a front-side direction input section operated by a finger of the hand holding the front-side holding section;
a rear-side direction input section operated by a finger of the hand holding the rear-side holding section; and
an operation signal output section which outputs operation signals of the front-side direction input section, the rear-side direction input section, and the trigger corresponding to inputs performed using the front-side direction input section, the rear-side direction input section, and the trigger,
the program causing the computer to function as:
   an operation signal input section which controls the communication with the game controller and to which the operation signal is input;
   a character control section which controls the game character based on the operation signal of the front-side direction input section and/or the rear-side direction input section; and
an actuation control section which controls actuation of the item based on the operation signal of the trigger.

According to another embodiment of the invention, there is provided a game device which comprises a game controller and executes a game by controlling a game character disposed in a game space and an item possessed by the game character and generating an image of the game space viewed from a virtual camera,
wherein the game controller has a specific shape held with both hands during use and comprises:
a barrel equivalent portion;
a front-side holding section and a rear-side holding section respectively provided in a front portion and a rear portion of the game controller, the front-side holding section being held with a right or left hand and the rear-side holding section being held with the other hand;
a trigger provided within a range in which the forefinger of the hand holding the rear-side holding section reaches the trigger;
a front-side direction input section operated by a finger of the hand holding the front-side holding section;
a rear-side direction input section operated by a finger of the hand holding the rear-side holding section; and
an operation signal output section which outputs operation signals of the front-side direction input section, the rear-side direction input section, and the trigger corresponding to inputs performed using the front-side direction input section, the rear-side direction input section, and the trigger, and
wherein the game device comprises:
a character control section which controls the game character based on the operation signal of the front-side direction input section and/or the rear-side direction input section output from the game controller; and
a weapon actuation control section which controls actuation of the item based on the operation signal of the trigger output from the game controller.

According to the above configuration, the player can play a game using the game controller, of which the front portion is held with one hand and the rear portion is held with the other hand, as an operation input device. The game controller includes the front-side direction input section, the rear-side direction input section, and the trigger provided near the front-side holding section and the rear-side holding section within a range reached by the fingers, and controls the game character and actuation of the item based on the operation input performed using the front-side direction input section, the rear-side direction input section, and the trigger. Specifically, the player can perform at least two direction inputs and the item use timing input necessary for playing the FPS game while holding the game controller. Therefore, an intuitive and smooth operation input suitable for game play can be realized, differing from universal game controllers provided to consumer game devices.

The number of directions respectively input using the front-side direction input section and the rear-side direction input section is not particularly limited. Examples include a case where one axial direction is input (e.g. dial) and a case where two axial directions (e.g. forward/backward and left/right) can be simultaneously input (e.g. XY-axis lever). A configuration may also be employed in which three or more axial directions are input using one device.

In the storage medium, the character control section may control movement and/or operation of the game character based on the operation signal of one of the front-side direction input section and the rear-side direction input section, and the program may cause the computer to further function as a camera control section which controls a line-of-sight direction and/or an angle of view of the virtual camera based on the operation signal of the other of the front-side direction input section and the rear-side direction input section.

The combination of the operation input for the movement and/or the operation of the game character and the operation input for the line-of-sight direction and/or the angle of view of the virtual camera is the most important operation input combination when playing the game.

According to the above configuration, the player can operate the trigger with the forefinger while holding the rear-side holding section with the right or left hand, and perform the operation input for the movement and/or the operation of the game character or the operation input for the line-of-sight direction and/or the angle of view of the virtual camera with the remaining fingers. The player can hold the game controller with the other hand holding the front-side holding section and perform the other operation input with the remaining fingers. Specifically, an excellent operability can be achieved with regard to the operation input for the movement and/or the operation of the game character and the operation input for the line-of-sight direction and/or the angle of view of the virtual camera.

In the storage medium, the character control section may control movement and/or operation of the game character based on the operation signal of one of the front-side direction input section and the rear-side direction input section, and
the program may cause the computer to further function as a control target select section which selects an item to be controlled by the actuation control section from a plurality of items based on the operation signal of the other of the front-side direction input section and the rear-side direction input section.

The operation input for the movement and/or the operation of the game character is important when playing the game. The operation of selecting the item used by the game character during the game is also an important factor for achieving an interesting game.

According to the above configuration, the player can operate the trigger with the forefinger while holding the rear-side holding section with the right or left hand, and perform the operation input for the movement and/or the operation of the game character or the operation input for the item selection operation with the remaining fingers. The player can hold the game controller with the other hand holding the front-side holding section and perform the other operation input with the remaining fingers. Specifically, an excellent operability can be achieved with regard to the movement and/or the operation of the game character and the selection operation of the item.

In the storage medium, the game controller may further include a specific operation button, and the operation signal output section may output an operation signal of the operation button, and
the control target select section may select the item based on the operation signal of the other of the front-side direction input section and the rear-side direction input section when the operation signal of the operation button is input.

The item selection operation actually accompanies exchanging one item for another.

According to the above configuration, the player can select the item using the front-side direction input section or the rear-side direction input section when operating the operation button. Specifically, a special operation such as an exchange operation in the actual situation can be produced by allowing the player to perform a special operation such as operating a specific operation button when performing a series of operation inputs relating to the moving operation, the searching operation, and the attack operation in the FPS game, for example. This configuration becomes more effective by providing the operation button at a position which requires the player to remove the finger from the trigger when operating the operation button. Specifically, since the attack operation is temporarily limited when removing the finger from the trigger and the player must again position the finger on the trigger after the selection operation, the player can be provided with a more realistic impression that the player exchanges one item for another.

In other words, a different function can be assigned to the front-side direction input section or the rear-side direction input section depending on the presence or absence of the operation input performed using the operation button. Therefore, operation multifunctionality can be achieved.

In the storage medium, the game controller may further include a specific operation button, and the operation signal output section may output an operation signal of the operation button,
the character control section may control movement and/or operation of the game character based on the operation signal of one of the front-side direction input section and the rear-side direction input section, and
the program may cause the computer to function as:
a control target select section which selects an item to be controlled by the actuation control section from a plurality of items based on the operation signal of the other of the front-side direction input section and the rear-side direction input section when the operation signal of the operation button is input; and
a camera control section which controls a line-of-sight direction and/or an angle of view of the virtual camera based on the operation signal of the other of the front-side direction input section and the rear-side direction input section when the operation signal of the operation button is not input.

According to the above configuration, even if a single input section has been operated, different types of control can be achieved depending on whether or not the operation button is operated. Therefore, operation multifunctionality can be achieved with a small number of operation input devices. In particular, the operation for the line-of-sight direction and/or the angle of view of the virtual camera is the operation for the direction of the virtual space displayed on the game screen (e.g. the operation for the enemy search direction in the FPS game). Therefore, the player can select an item appropriate for attacking an enemy in the FPS game or the like merely by operating the operation button immediately after finding the enemy by enabling the operation for the line-of-sight direction and/or the angle of view of the virtual camera and the item selection operation to be switched depending on whether or not the operation button is operated. Therefore, a more excellent operability can be achieved.

In the storage medium, the game controller may further include a specific operation button, and the operation signal output section may output an operation signal of the operation button,
the program may cause the computer to function as:
a camera control section which controls a line-of-sight direction and/or an angle of view of the virtual camera based on the operation signal of one of the front-side direction input section and the rear-side direction input section; and
a control target select section which selects an item to be controlled by the actuation control section from a plurality of items based on the operation signal of the other of the front-side direction input section and the rear-side direction input section when the operation signal of the operation button is input, and
the character control section may control movement and/or operation of the game character based on the operation signal of the other of the front-side direction input section and the rear-side direction input section when the operation signal of the operation button is not input.

According to the above configuration, even if a single input section has been operated, different types of control can be achieved depending on whether or not the operation button is operated. Therefore, operation multifunctionality can be achieved with a small number of operation input devices.

The item selection operation actually accompanies exchanging one item for another. In many cases, a person stops at a moment and exchanges one item for another. Therefore, since the player cannot perform the operation input for the movement and/or the operation of the game character when performing the item selection operation by enabling the operation for the movement and/or the operation of the game character and the item selection operation to be switched depending on whether or not the operation button is operated, the movement and the operation is limited due to the exchange operation in the same manner as in the actual situation, whereby the reality can be further improved.

In the storage medium, the character control section may control movement of the game character in the game space in an upward/downward direction based on the operation signal of one of the front-side direction input section and the rear-side direction input section, and may control movement of the game character in the game space in a forward/backward direction based on the operation signal of the other of the front-side direction input section and the rear-side direction input section.

According to the above configuration, the movement of the game character in the upward/downward direction can be input using one of the front-side direction input section and the rear-side direction input section, and the movement of the game character in the forward/backward direction can be input using the other of the front-side direction input section and the rear-side direction input section. Therefore, the operation input can be simplified by classifying the devices to be operated depending on the direction in which the game character is moved, whereby an intuitive and smooth operation input can be performed, even if the game character can freely move three-dimensionally, for example.

For example, when using a lever which allows simultaneous inputs in two axial directions (XY axes) as each of the front-side direction input section and the rear-side direction input section, it is effective to assign one of the front-side direction input section and the rear-side direction input section which is disposed so that the lever operation direction coincides with the forward/backward direction of the player to control of the movement of the game character in the forward/backward direction in the game space. Specifically, since the player's sense of the forward/backward direction coincides with the forward/backward direction of the game character, a more intuitive and smoother operation input can be achieved.

Likewise, if one of the front-side direction input section and the rear-side direction input section which is disposed so that the lever operation direction coincides with the upward/downward direction of the player to control of the movement of the game character in the upward/downward direction in the game space, a further intuitive and smoother operation input can be achieved.

In the storage medium, the character control section may cause the game character to perform a special movement accompanying a specific operation based on the operation signal of one of the front-side direction input section and the rear-side direction input section, and may cause the game character to perform a normal movement which does not accompany the specific operation based on the operation signal of the other of the front-side direction input section and the rear-side direction input section.

The term "normal movement" used herein means a walk or a run when the game character has feet, for example. The term "special movement accompanying a specific operation" used herein means a movement accompanying a roll operation such as a forward roll or a cartwheel or a jump operation such as a dash or a jump back. The term "special movement accompanying a specific operation" includes an operation of which the extent of one operation is relatively larger than that of the normal movement. The special movement may accompany an operation in which the operation of part of body is limited, such as sticking out only the head from something. The special movement is particularly effective as an evasive movement when it is desired to immediately hide behind something or when the enemy attacks or as a stalking movement of approaching the enemy without being found by the enemy in the FPS game, for example.

Therefore, an operation appropriate for the state of the game process can be immediately performed by merely performing the direction input operation by causing the game character to perform the normal movement in response to the operation input from one direction input section and causing the game character to perform the special movement in response to the operation input from the other direction input section, whereby the operability is further improved.

In the storage medium, the game controller may further include a specific operation button, and the operation signal output section may output an operation signal of the operation button; and
the character control section may cause the game character to perform a special movement accompanying a specific operation based on the operation signal of the front-side direction input section and/or the rear-side direction input section when the operation signal of the operation button is input, and may cause the game character to perform a normal movement which does not accompany the specific operation when the operation signal of the operation button is not input.

Specifically, the special movement and the normal movement may be assigned depending on whether or not a specific operation button is operated. A movement input by operating a single input device can be promptly switched between the special movement and the normal movement depending on whether or not the operation button is operated, whereby the game operability can be further improved.

In the storage medium, the character control section may control movement of the game character based on the operation signal of one of the front-side direction input section and the rear-side direction input section, and may control a defense operation of the game character based on the operation signal of the other of the front-side direction input section and the rear-side direction input section.

When the game character possesses a defense item (e.g. shield, barrier shield, chaff, or dummy), for example, the term "defense operation" used herein includes an operation of enabling (actuating) the defense item and reducing the damage caused by the enemy or avoiding the enemy's attack. The term "defense operation" also includes a prompt avoidance operation as compared with the normal operation, such as a step back and a cartwheel.

According to this embodiment, since the player can control the movement of the game character using one of the direction input sections and control the defense operation using the other direction input section, an excellent operability allowing prompt offense/defense switching can be realized. This is effective when the player fights against the enemy with a non-projectile weapon such as a knife in a close fighting in the FPS game. The player can recognize a more excellent operability when playing a game using a sword as the major weapon. The operability can be further improved by assigning a different position of the protector as the defense operation differing depending on the direction input or allowing the player to select the type of defense item or avoidance operation.

In the storage medium, the character control section may control movement and/or operation of the game character based on the operation signal of one of the front-side direction input section and the rear-side direction input section; and
the program may cause the computer to further function as a command execution section which selects a command to be issued from a plurality of commands and executes the selected command based on the operation signal of the other of the front-side direction input section and the rear-side direction input section.

The term "command" used herein means action instructions for a teammate character from the player's character, enablement of a specific magic which affects the entire game stage, bombing instructions, and the like.

In the storage medium, the program may cause the computer to function as:
a pointer marker display control section which displays a pointer marker on the generated image of the game space and changes a display position of the pointer marker based on a change in a barrel direction of the barrel equivalent portion detected by a specific detection method;
a marker specific range detection section which detects that the pointer marker has been positioned within a specific peripheral range of the game image; and
a marker position camera control section which controls a line-of-sight direction of the virtual camera in response to detection by the marker specific range detection section.

According to the above configuration, the pointer marker can be displayed on the game screen based on the change in the barrel direction of the game controller, and the line-of-sight direction of the virtual camera can be changed by detecting that the pointer marker is positioned in the specific peripheral range of the game image. Therefore, the player can observe the desired direction of the virtual space by the operation of changing the attack direction of the game controller (e.g. operation of changing the muzzle direction), whereby the operability can be further improved.

In the storage medium, the marker position camera control section may change the line-of-sight direction of the virtual camera from the center of the game image to the position of the pointer marker.

According to the above configuration, when the player has changed the attack direction of the game controller, the player can move the line of sight in that direction, whereby the operability can be further improved.

In the storage medium, the marker position camera control section may increase a change speed of the line-of-sight direction of the virtual camera as the pointer marker is positioned closer to an edge of the game image.

According to the above configuration, the line-of-sight direction of the virtual camera can be changed at a higher speed as the pointer marker is positioned closer to the edge of the game screen. Specifically, since the player can adjust the movement of the line of sight by merely changing the direction of the game controller, the operability can be further improved, whereby a more intuitive and smoother operation input can be achieved.

The embodiments to which the invention is applied are described below with reference to the drawings. This embodiment illustrates an example in which the player plays a first-person shooter (FPS) game using a gun-type game controller imitating a gun. The term "FPS game" refers to one type of game in which the player operates a player's character while watching a game screen on which a game world is displayed which is viewed from the view point (first-person view point) of the player's character, and proceeds with the game while attacking an enemy character using a weapon such as a gun.

The configuration of the game controller is not limited to a gun. The configuration of the game controller may be appropriately changed depending on the type of game insofar as the game controller imitates a weapon or a tool used by the player's character during the game. For example, a sword-type game controller may be employed when implementing a fencing game in which the player fights against an enemy with a sword. The game controller may be formed to imitate a magic item which emits flames.

The game to which the invention can be applied is not limited to the FPS game. This embodiment may also be applied to a game in which the player plays the game while watching a game screen on which a game world is displayed which is viewed from a camera disposed behind the player's character, such as a third-person shooter (TPS) game which belongs to the same type as the FPS game and differs from the FPS game as to the view point position to some extent.

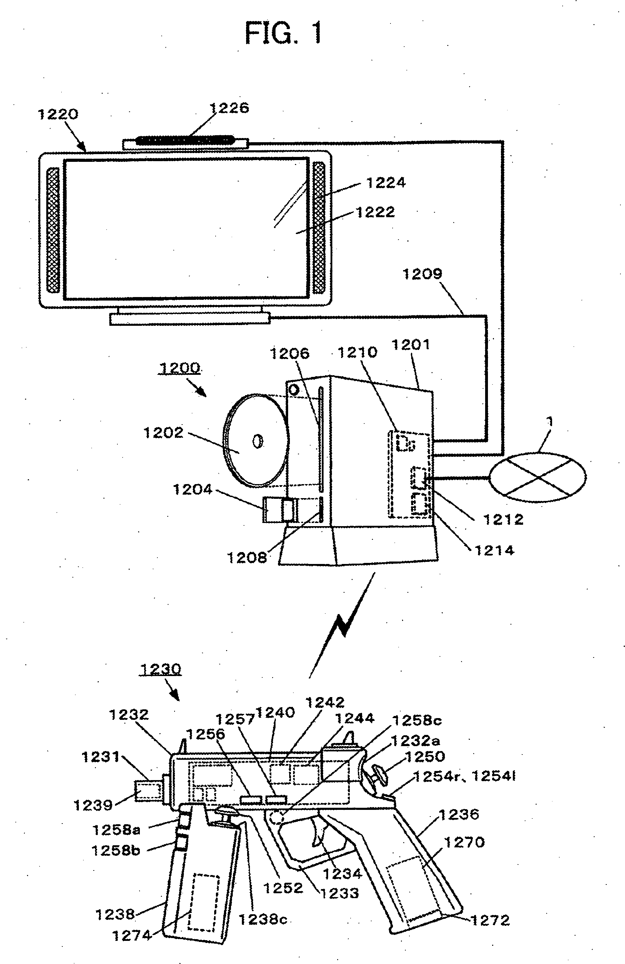

FIG. 1 is a system configuration diagram illustrative of a configuration example of a consumer game device according to this embodiment. A game device main body 1201 of a consumer game device 1200 includes a control unit 1210 provided with a CPU, an image processing LSI, an IC memory, and the like, and readers 1206 and 1208 for information storage media such as an optical disk 1202 and a memory card 1204. The consumer game device 1200 executes a given video game by reading a game program and setting data from the optical disk 1202 and the memory card 1204 and performing game calculations based on an operation input performed using a game controller.

A game image and game sound generated by the control unit 1210 of the consumer game device 1200 are output to a video monitor 1220 connected to the consumer game device 1200 via a signal cable 1209. The player enjoys the game while watching the game image displayed on a display 1222 of the video monitor 1220 and listening to the game sound such as background music (BGM) and effect sound output from a speaker 1224.

The consumer game device 1200 may acquire the game program and setting data necessary for executing the game by connecting with a communication line 1 via a communication device 1212 and downloading the game program and setting data from an external device. The term "communication line" used herein means a communication channel through which data can be exchanged. Specifically, the term "communication line" includes a communication network such as a local area network (LAN) using a private line (private cable) for direct connection, Ethernet (registered trademark), and the like, a telecommunication network, a cable network, and the Internet. The communication method may be a cable communication method or a wireless communication method.

In the consumer game device 1200 according to this embodiment, a gun-type controller 1230 is used as the game controller. The gun-type controller 1230 according to this embodiment is formed to imitate an automatic rifle held with both hands during use. Specifically, a trigger 1234 surrounded by a trigger guard 1233 is provided under a barrel 1232 having a muzzle 1231 at the front end, and a main grip 1236 extends from the bottom of the rear portion of the barrel positioned adjacent to the trigger 1234. A subgrip 1238 extends from the bottom of the front portion of the barrel 1232 positioned ahead of the trigger guard 1233.

The player holds the main grip 1236 with the right hand with the forefinger placed on the trigger 1234, and holds the subgrip 1238 with the left hand. The player adjusts the direction of the muzzle 1231 using the subgrip 1238 while maintaining the basic position using the main grip 1236. The player aims the muzzle 1231 at an enemy character or a target displayed on the game screen, and performs a shooting operation by appropriately pulling the trigger 1234.

The method of detecting the point on the game screen at which the gun-type controller 1230 aims (i.e., the position coordinates on the game screen indicated by the barrel direction) is implemented by known technology using the gun-type controller 1230 as a pointing device. Therefore, a detailed description is omitted. For example, the method disclosed in JP-A-11-169557 or the method disclosed in Japanese Patent No. 3140971 may be employed.

The detection method may also be implemented as follows. Specifically, an image sensor 1239 is provided in the opening in the gun-type controller 1230 corresponding to the muzzle 1231, and the relative positions of the gun-type controller 1230 and the display 1222 are detected by analyzing the image photographed by the image sensor 1239.

In more detail, a light emitter 1226 disposed at a fixed position with respect to the display 1222 emits light toward a specific range in front of the display 1222. The image sensor 1239 photographs light spots Pa and Pb emitted from the light emitter 1226 and the state around the display 1222, and outputs the photographed image data to a controller control unit 1240.

The controller control unit 1240 includes electronic parts such as an IC chip, an IC memory, a six-axis acceleration sensor 1242, and a short-distance wireless module 1244. The controller control unit 1240 controls data exchange with the outside and controls the entire controller. The short-distance wireless module 1244 realizes a short-distance wireless communication with a short-distance wireless module 1214 provided in the control unit 1210 of the game device main body 1201. Therefore, the image data photographed by the image sensor 1239 is transmitted to the game device main body 1201 by the controller control unit 1240 via short-distance wireless communication.

The controller control unit 1240 transmits the accelerations of the gun-type controller 1230 around the three axes (yaw, pitch, and roll) and in the forward/backward, right/left, and upward/downward directions detected by the six-axis acceleration sensor 1242 to the game device main body 1201.

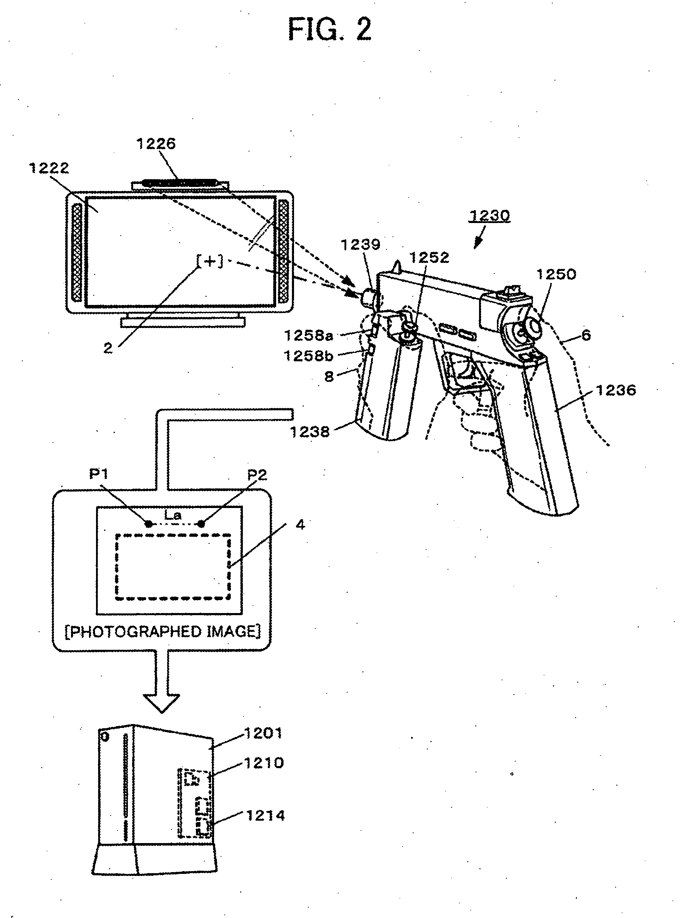

As shown in FIG. 2, the light emitter 1226 is disposed at a position at which the light emitter 1226 emits light forward from the display 1222, and a specific frame 4 is displayed on the display screen before starting the game, for example. An image photographed by the image sensor 1239 is analyzed in which the light spots P1 and P2 and the frame 4 appear. Specifically, the relationship between the relative positions of the screen range of the display 1222 and the light spots P1 and P2 is calibrated based on the positions of the light spots P1 and P2 in the image photographed by the image sensor 1239 and the position of the frame 4 displayed on the display 1222.

Since the light emitter 1226 is fixed, the length La of the line segment between the light spots Pa and Pb is constant. Therefore, the relative forward/backward movement of the gun-type controller 1230 with respect to the display 1222 can be geometrically calculated based on the laws of perspective from the change in the length La of the line segment between the light spots at the time of calibration. Alternatively, the relative forward/backward movement of the gun-type controller 1230 with respect to the display 1222 may also be calculated based on the laws of motion from the acceleration in the forward/backward direction detected by the six-axis acceleration sensor 1244.

With regard to a change in the position (posture) of the gun-type controller 1230, a change in the roll angle of the gun-type controller 1230 can be determined from a change in the slope of the line segment connecting the light spots Pa and Pb at the time of calibration. Alternatively, changes in the pitch, roll, and yaw of the gun-type controller 1230 may also be determined using the six-axis acceleration sensor 1244.

Therefore, the center position of the image photographed by the image sensor 1239 at the time of calibration is stored while being associated with the image coordinate system of the display 1222 as the initial position at which the muzzle 1231 is aimed. A change in the direction of the muzzle 1231 is geometrically calculated from the forward/backward movement and a change in position of the gun-type controller 1230. As a result, the position in the screen coordinate system at which the gun-type controller 1230 currently points is identified, and a pointer 2 is displayed at the position at which the muzzle 1231 is aimed to assist the player's game play.

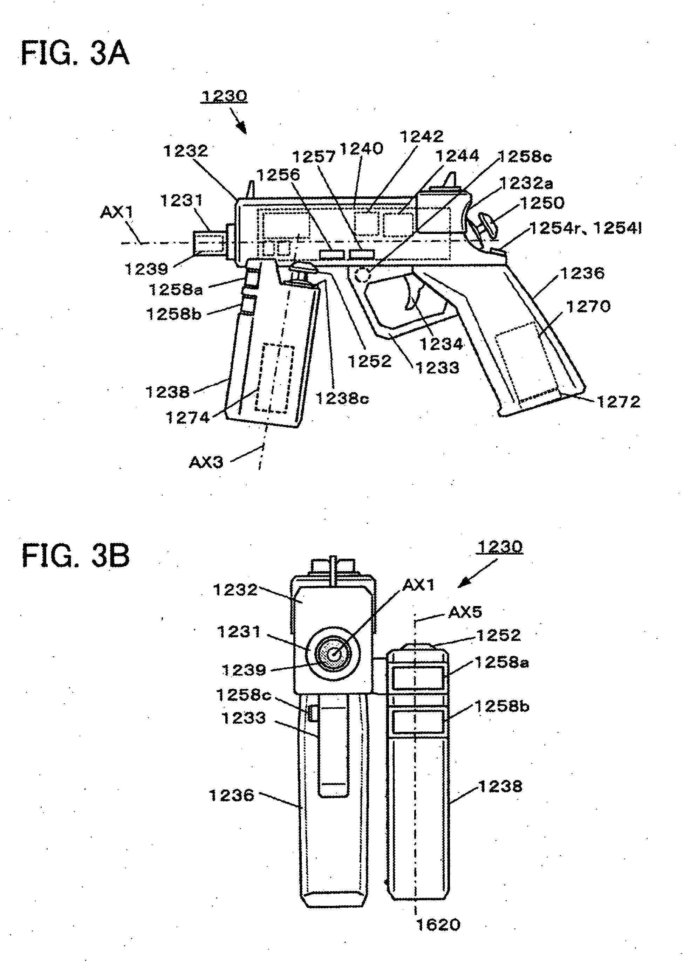

The configuration of the gun-type controller 1230 according to this embodiment is described below in more detail. FIG. 3 is a view showing the configuration of the gun-type controller 1230 according to this embodiment. FIG. 3A is a left side view, and FIG. 3B is a front view.

As shown in FIGS. 1 to 3, the trigger 1234 surrounded by the trigger guard 1233 is provided under the barrel 1232 of the gun-type controller 1230 according to this embodiment. The main grip 1236 extends behind the trigger 1234, and the subgrip 1238 is provided on the left side of the front portion of the barrel 1232 positioned forward of the trigger guard 1233. The subgrip 1238 is secured to the barrel 1232 so that the longitudinal direction AX3 faces diagonally forward and downward. The longitudinal direction AX3 has a displaced relationship with the barrel direction AX1 so that the longitudinal direction AX3 does not intersect the barrel direction AX1.

Input sections for inputting necessary operations when playing the FPS game are provided at various position of the gun-type controller 1230. In this embodiment, the gun-type controller 1230 includes the trigger 1234 for inputting a shooting operation, a main lever 1250 provided above the main grip 1236, and a sublever 1252 provided in the upper portion of the subgrip 1238.

The main lever 1250 and the sublever 1252 are input devices called "analog levers", and have a tiltable stick which allows simultaneous inputs in two axial directions (i.e., forward/backward direction and right/left direction). When the player tilts the stick from an unoperated neutral position with the finger, the amount of tilt (tilt angle) in each of the two axial directions is output from the main lever 1250 and the sublever 1252 by means of an analog signal. The main lever 1250 and the sublever 1252 also function as push switches when the sticks are depressed.

The main lever 1250 is disposed in a first depression 1232a which is depressed forward (muzzle direction) and provided at the rear end of the barrel positioned above the base of the main grip 1236, and is installed so that the stick at the neutral position (no input) extends diagonally backward and upward. Specifically, the two axial directions which can be input using the main lever 1250 are set to be the upward/downward direction and the right/left direction with respect to the player.

The position at which the main lever 1250 is provided corresponds to the position at which the player can operate the main lever 1250 when stretching the thumb while holding the main grip 1236 with the right hand 6 to achieve a positional relationship in which the stick of the main lever 1250 at the neutral position is perpendicular to the ball of the thumb (i.e., the axial direction of the stick at the neutral position almost coincides with the thumb pressing direction). The main lever 1250 is provided to be displaced to the left to some extent from the center of the barrel 1232 in the right/left direction, and is disposed so that the input vertical axis direction (upward/downward tilt direction) coincides with the direction in which the player bends and stretches the thumb while holding the main grip 1236 with the right hand 6. Specifically, the stick can be accommodated in the first depression 1232a by providing the main lever 1250 in the first depression 1232a so that the end of the stick is positioned near the thumb when the player stretches the thumb while holding the main grip 1236 with the right hand.

When the player stretches the thumb while holding the main grip 1236 with the right hand, the thumb is naturally displaced to the left to some extent from the center of the barrel in the right/left direction. Since the main lever 1250 is displaced to the left to some extent from the center of the barrel in the right/left direction, the player can more easily operate the stick with the thumb. Moreover, since the main lever 1250 is disposed so that the stick extends diagonally backward and upward in the neutral state, the player can equally operate the main lever 1250 with the thumb in the upward/downward and right/left directions.

The subgrip 1238 is formed so that the upper surface is depressed stepwise on the rear side. The sublever 1252 is provided on a depressed installation surface 1238c so that the stick faces upward at the neutral position.

The position at which the sublever 1252 is provided corresponds to the position at which the player can operate the stick of the sublever 1252 with the thumb when holding the subgrip 123 8 with the left hand 8 so that the forefinger is positioned along an A-button 1258a and the middle finger is positioned along a B-button 1258b and then stretching and bending the thumb forward to some extent. Specifically, the length of the stick of the sublever 1252 is absorbed by disposing the sublever 1252 in the depressed portion of the upper surface of the subgrip 1238, and the sublever 1252 is disposed so that the end of the stick is disposed at a position at which the thumb can be easily placed on the stick while holding the subgrip 1238 with the left hand 8. This allows the player to comfortably and easily perform an input operation. Since the sublever 1252 is provided so that the stick faces upward at the neutral position, the two axial directions which can be input are the forward/backward direction and the right/left direction with respect to the player.

The gun-type controller 1230 according to this embodiment includes an R-button 1254r and an L-button 12541 disposed near the main lever 1250 side by side, a start button 1256 and a select button 1257 provided on the left side surface of the barrel, the A-button 1258a and the B-button 1258b provided on the front surface of the sublever 1238, and a C-button 1258c provided on the right side surface of the trigger guard 1233 as push-button switches for inputting various switching operations and the like.

For example, the A-button 1258a and the B-button 1258b are respectively provided at positions reached by the forefinger and the middle finger when the player holds the subgrip 1238 with the left hand 8. The C-button 1258c is provided at a position reached by the forefinger, which has been placed on the trigger 1234, when the player holds the main grip 1236 with the right hand 6.

The gun-type game controller 1230 according to this embodiment includes a built-in battery 1270 which is provided in the main grip 1236 and charged with electricity supplied from the outside via a contactless power receiving terminal 1272. The gun-type game controller 1230 is provided with necessary electricity from the built-in battery 1270.

### <Assignment of operation>

The player's character according to this embodiment and its operation are described below.

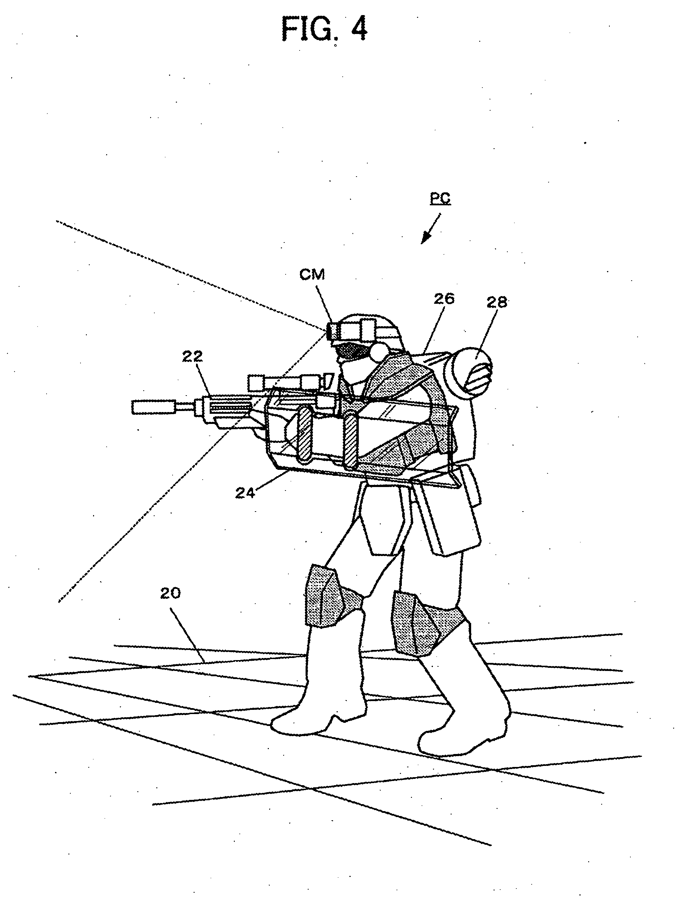

FIG. 4 is an oblique external view showing an example of the player's character according to this embodiment. As shown in FIG. 4, a player's character PC imitating a soldier is used in this embodiment. The player's character PC is formed as a three-dimensional model using a polygon model or the like. The player's character PC is disposed in a virtual space and controlled as to the operation. The player's character PC holds a weapon item 22 (hereinafter may be simply called "weapon") with the right hand with a defense item 24 (hereinafter may be simply called "protector") attached to the left hand.

A backpack 26 on the back includes a jet nozzle 28 so that the player's character PC can fly for a short period of time. A view point camera CM which is a virtual camera used as a view point in the FPS game is attached to the head of the player's character PC. The photographing direction of the view point camera CM is fixed so that the photographing direction coincides with the line-of-sight direction of the player's character PC. The appearance of the view point camera CM is shown in FIG. 4. Note that the view point camera CM may not be displayed.

In the FPS game according to this embodiment, when the player has input an operation using the gun-type controller 1230, the operation of the player's character PC is controlled according to the operation input. In the game, the player searches for an enemy character which is computer-controlled in the game stage by causing the player's character PC to walk or run on a movement surface 20 (e.g. ground or floor) in the game space disposed in the virtual space or move onto the movement surface 20 with a different height (e.g. on a building or a different floor) utilizing the backpack 26. When the player's character PC has encountered an enemy character, the player causes the player's character PC to attack the enemy character with the weapon 22 while protecting against the enemy's attack using the protector 24.

In this case, the forward direction of the player's character PC is regarded as the line-of-sight direction of the player's character PC. Specifically, the forward movement of the player's character PC is the movement in the forward field-of-view direction, and the basic moving operation is performed based on the forward movement, the backward movement, and the right/left parallel movement.

Specifically, when the player moves the line of sight of the player's character PC to the right or left, the direction of the upper half of the body of the player's character PC changes in the same direction so that the forward direction of the player's character PC in the game space changes. Therefore, when the player causes the player's character PC to perform a series of operations such as perpendicularly turning to the right in a passage and then moving forward in the passage, the player's character PC moves forward to the corner of the passage, moves the line of sight to the right to change the direction of the body, and again moves forward.

The situation in front of the player's character PC is photographed using the view point camera CM, and displayed as a game screen. Since the pointer 2 is displayed on the display 1222 at a position at which the muzzle 1231 of the gun-type controller 1230 is aimed, the pointer 2 is always displayed on the game screen unless the muzzle 1231 is aimed outside the display range of the display 1222. Therefore, when the enemy character is displayed within the field of view (i.e., on the game screen), the player can cause the player's character PC to shoot the enemy character by finely adjusting the shooting direction while aiming the muzzle 1231 of the gun-type controller 1230 so that the pointer 2 coincides with the enemy character without changing the line-of-sight direction and pulling the trigger 1234.

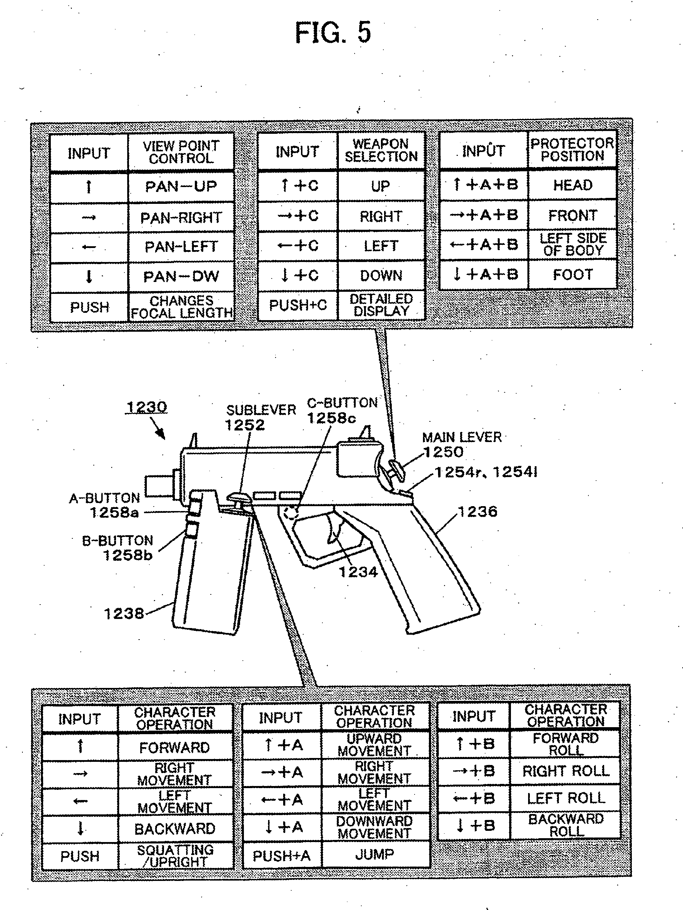

FIG. 5 is a view showing an example of assignment of control to operation inputs performed using the gun-type controller 1230 according to this embodiment. The lever operation direction is indicated by an arrow in that direction, and the first letter of the button name is provided when the button is operated at the same as the lever. For example, a symbol "↑+A" means that the A-button 1258a is pressed while operating the lever upward or forward.

In this embodiment, the operation in the line-of-sight direction of the player's character PC, that is, the photographing direction of the view point camera CM is associated with the independent operation for the main lever 1250. The two axial directions (i.e., upward/downward direction and the right/left direction) which can be input using the main lever 1250 are associated with the upward/downward direction and the right/left direction of the screen. When the player operates the main lever 1250 in the upward direction, the view point camera CM faces upward (PAN-UP) at a speed corresponding to the operation speed in an amount corresponding to the amount of operation. Likewise, when the player operates the main lever 1250 in the right direction, the view point camera CM pans to the right (PAN-RIGHT) so that the player can observe the situation on the right of the player's character PC.

When the player presses the main lever 1250, the setting of the focal length of the lens of the view point camera CM sequentially changes. For example, a focal length corresponding to the field of view of a human is set in the initial state. When the player presses the main lever 1250 once, the center of the field of view is enlarged to achieve a telephotographing state. When the player again presses the main lever 1250, the initial state is recovered.

The player can select the type of weapon used by operating the main lever 1250 while pressing the C-button 1258c. Specifically, the player's character PC according to this embodiment carries two or more types of weapons. Examples of the weapons include projectile weapons such as a pistol, an automatic rifle, an assault rifle, a grenade launcher, and a bow, non-projectile weapons such as a knife, a sword, a spear, and a sword, and the like. Specifically, when the player removes the forefinger from the trigger 1234 and presses the C-button 1258c provided on the trigger guard 1233 with the forefinger, icons of selectable weapons are displayed on the screen in a circle. The player then operates the main lever 1250 in the upward, downward, right, or left direction to select the icon of the desired weapon by a independent operation. When the player releases the C-button 1258c in a state in which the icon of the desired weapon is selected, the selection of the weapon is determined.

When the player operates the main lever 1250 while pressing the A-button 1258a and the B-button 1258b at the same time, the player can cause the player's character PC to perform an appropriate defense operation against the enemy's attack by changing the position of the protector 24 attached to the left hand. For example, when the player operates the main lever 1250 upward while pressing the A-button 1258a and the B-button 1258b at the same time, the player's character PC raises the left arm in front of the head to cover the head with the protector 24. When the player operates the main lever 1250 downward while pressing the A-button 1258a and the B-button 1258b at the same time, the player's character PC lowers the left arm to protect the feet.

In this embodiment, the normal moving operation of the player's character PC is associated with the independent operation for the sublever 1252. In this embodiment, the term "normal moving operation" means that the player's character PC walks or runs.

The two axial directions (i.e., forward/backward direction and the right/left direction) which can be input using the sublever 1252 are associated with the forward/backward direction and the right/left direction of the player's character PC in the game space displayed on the game screen. When the player operates the sublever 1252 forward, the player's character PC moves forward on the movement surface 20 at a speed corresponding to the operation angle in an amount corresponding to the amount of operation. When the player operates the sublever 1252 to the right, the player's character PC moves to the right (right parallel movement).

When the player presses the sublever 1252, the player's character PC sequentially undergoes a standing position and a squatting position. For example, the player's character PC stands upright in the initial state. When the player presses the sublever 1252 once, the player's character PC squats with the knees bent. When the player again presses the sublever 1252, the player's character PC stands upright.

The player can adjust the upward/downward movement of the player's character PC by operating the sublever 1252 while pressing the A-button 1258a. Specifically, the player's character PC according to this embodiment can fly for a short period of time utilizing the backpack 26. For example, when the player operates the sublever 1252 forward while pressing the A-button 1258a, the player's character PC moves upward. Specifically, a state is displayed in which gas is jetted from the jet nozzle 28 of the backpack 26, and the player's character PC flies upward in the game space. When the player operates the sublever 1252 to the right while pressing the A-button 1258a, the player's character PC moves to the right (i.e., the player's character PC flies to the right).

When the player presses the sublever 1252 while pressing the A-button 1258a, the player's character PC jumps.

When the player operates the sublever 1252 while pressing the B-button 1258b, the player's character PC performs a special operation corresponding to the operation input performed for the sublever 1252. In this embodiment, the player's character PC rolls in the same manner as a forward roll. For example, when the player operates the sublever 1252 to the right while pressing the B-button 1258b, the player's character PC rolls to the right. This operation is set to be a fast movement as compared with the right parallel movement of the normal moving operation, and is suitable for evading the enemy's attack. Specifically, the above operation may be utilized as a defense operation. When the player operates the sublever 1252 backward while pressing the B-button 1258b, the player's character PC rolls backward. The special operations may be the same type of movement which differs in the moving direction in the same manner as the roll movement according to this embodiment, or different operations may be set depending on the operation input direction of the sublever 1252. For example, a forward input may be associated with a forward roll or a kick operation, an input in the right/left direction may be associated with a jump back in the right/left direction, and a backward input may be associated with a step back or a roll by 180 degrees.

Appropriate operations may be similarly assigned to the R-button 1254r and the L-button 12541 according to this embodiment. For example, weapon select operations may be assigned to the R-button 1254r and the L-button 12541. A weapon selection display may be displayed when the R-button 1254r or the L-button 12541 has been pressed, and the selection candidate may be sequentially selected using the R-button 1254r as a right select button and the L-button 12541 as a left select button. A radar screen display, a bullet loading operation ("reload" operation), and the like may also be appropriately set.

### <Functional block>

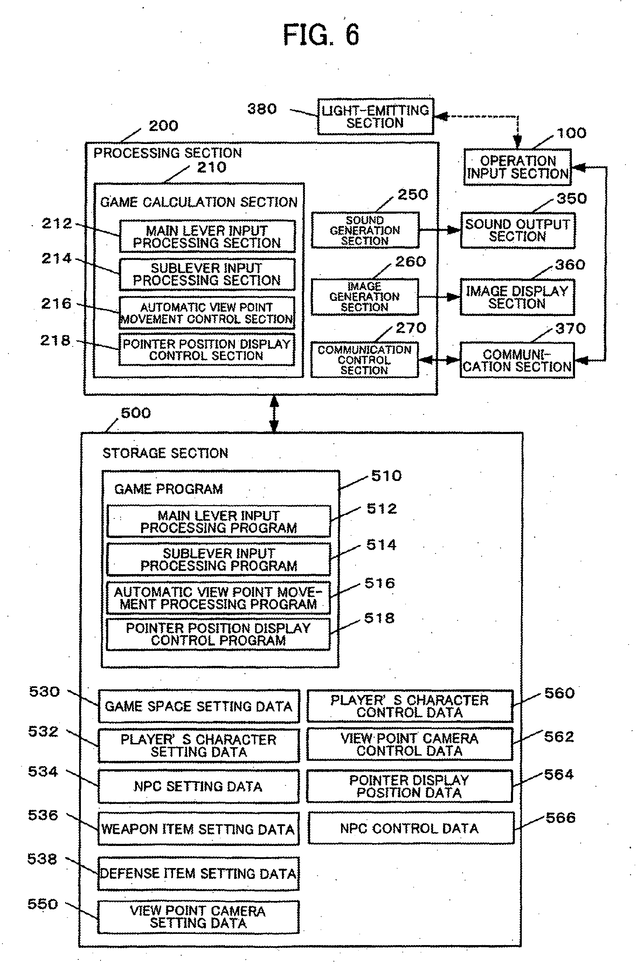

A functional configuration according to this embodiment is described below. FIG. 6 is a functional block diagram showing an example of a functional configuration according to this embodiment. As shown in FIG. 6, the consumer game device according to this embodiment includes an operation input section 100, a processing section 200, a sound output section 350, an image display section 360, a communication section 370, and a storage section 500.

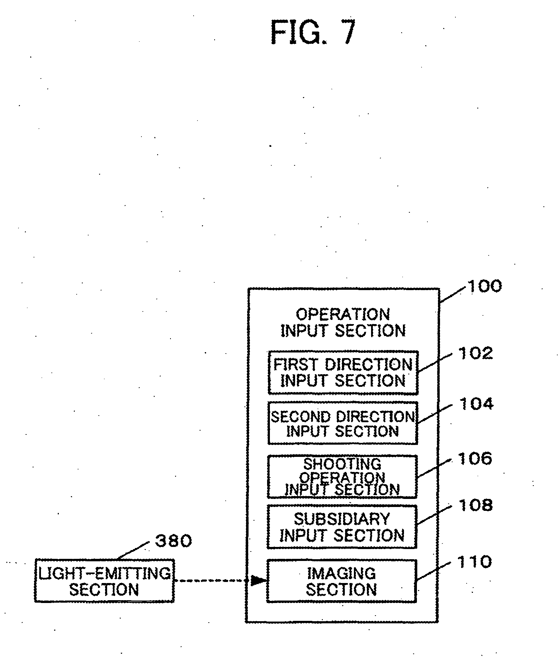

The operation input section 100 outputs an operation input signal to the processing section 200 in response to various operation inputs performed by the player. In this embodiment, since the operation input section 100 transmits the operation input signal using a wireless communication, the operation input signal output from the operation input section 100 is input to the processing section 200 via the communication section 370. In FIG. 1, the gun-type controller 1230 corresponds to the operation input section 100. As shown in FIG. 7, the operation input section 100 according to this embodiment includes a first direction input section 102, a second direction input section 104, a shooting operation input section 106, a subsidiary input section 108, and an imaging section 110.

The first direction input section 102 and the second direction input section 104 output the operation input signal in response to the operation input for the moving direction of the player's character PC and the operation input for the line-of-sight direction of the view point camera CM. The first direction input section 102 and the second direction input section 104 are implemented by direction input elements. For example, a analog lever, a dial, a handle, a trackpad, an acceleration sensor, a tilt sensor, or the like may be used. In FIG. 3, the main lever 1250 and the sublever 1252 respectively correspond to the first direction input section 102 and the second direction input section 104.

The shooting operation input section 106 outputs the operation input signal in response to the input operation for the attack timing of the player's character PC. The shooting operation input section 106 is implemented by an input element which can output a different signal depending on the presence or absence of input. For example, a push switch, a touch sensor, a lever, a shading sensor, or the like may be used. In FIG. 3, the trigger 1234 corresponds to the shooting operation input section 106.

The subsidiary input section 108 outputs a subsidiary signal for changing the operations which can be input using the first direction input section 102 and the second direction input section 104 in response to the operation input. Specifically, the processing section 200 switches control of the operation of the player's character PC or the operation of the view point camera CM performed in response to the operation input signal from the first direction input section 102 or the second direction input section 104 depending on the presence or absence of the subsidiary signal. That is, the subsidiary input section 108 plays a role which corresponds to the shift key for the first direction input section 102 or the second direction input section 104.

The subsidiary input section 108 is implemented by an input element which can output a different signal depending on the presence or absence of input. For example, a push switch, a touch sensor, a lever, a shading sensor, or the like may be used. In FIG. 3, the A-button 1258a, the B-button 1258b, the C-button 1258c, the R-button 1254r, and the L-button 12541 correspond to the shooting operation input section 106. The subsidiary input section 108 may also be used to achieve an independent operation input in addition to the function of the shift key. For example, a bullet loading operation (reload operation) for the weapon 22, a call for a menu screen, or the like may be assigned to the subsidiary input section 108.

The imaging section 110 outputs an image signal generated by photographing light from an emission point of a light-emitting section 380 in a specific cycle such as intervals of 1/200 seconds. The imaging section 110 may be implemented by an image sensor such as a CCD or a CMOS. In this embodiment, since two emission points possessed by the light-emitting section 380 are photographed, an area image sensor may be used. Since the light-emitting section 380 emits infrared radiation, it is preferable to provide a filter so that the infrared radiation can be selectively imaged. In FIG. 3, the image sensor 1239 corresponds to the imaging section 110.

The processing section 200 is implemented by electronic parts such as a microprocessor, an application-specific integrated circuit (ASIC), and an IC memory. The processing section 200 inputs and outputs data to and from each functional section of the game device 1200 including the operation input section 100 and the storage section 500, and controls the operation of the game device 1200 by performing calculations based on a specific program, data, and the operation input signal from the operation input section 100. In FIG. 1, the control unit 1210 provided in the game device main body 1201 corresponds to the processing section 200.

The processing section 200 according to this embodiment includes a game calculation section 210, a sound generation section 250, an image generation section 260, and a communication control section 270.

The game calculation section 210 executes a progress relating to the game process. For example, the game calculation section 210 forms the game space (battlefield in the FPS game) in the virtual space, disposes the player's character PC and the enemy character in the virtual space, and automatically controls the operation of the enemy character. The game calculation section 210 also activates the weapons used by the player's character PC and the enemy character. In this embodiment, since the player's character PC uses a firearm, the player's character PC shoots the enemy with the weapon 22 when the player has operated the trigger 1234 of the gun-type controller 1230, for example. The game calculation section 210 also performs a hit determination process and a damage calculation process when the player's character PC attacks the enemy character and the enemy character attacks the player's character PC, calculates the game results, and controls the photographing conditions of the view point camera CM (including setting the focal length of the lens).

The game calculation section 210 according to this embodiment includes a main lever input processing section 212, a sublever input processing section 214, and an automatic view point movement control section 216 relating to operation control of the player's character PC. The game calculation section 210 includes a pointer position display control section 218 which calculates the position on the display 124 indicated by the muzzle 1231 (barrel direction) of the gun-type controller 1230, and displays the pointer 2 at the calculated position.

The main lever input processing section 212 controls the player's character PC and the view point camera CM based on the operation input signal from the operation input section 100. Likewise, the sublever input processing section 214 controls the player's character PC and the view point camera CM based on the operation input signal from the operation input section 100.

The automatic view point movement control section 216 automatically controls the photographing direction of the view point camera CM depending on a change in the direction of the muzzle 1231. Specifically, the automatic view point movement control section 216 acquires the position on the screen indicated by the muzzle 1231 calculated by the pointer position display control section 218 (i.e., position information of the pointer 2), and, when the pointer 2 is positioned near the game screen, the automatic view point movement control section 216 causes the view point camera CM to face in the direction from the center of the screen to the pointer 2.

The pointer position display control section 218 acquires the image signal from the imaging section 110 of the operation input section 100 via the communication section 370, and calculates the position indicated by the muzzle 1231 of the gun-type controller 1230 in the image coordinate system of the display 1222 by analyzing the photographed image.

The sound generation section 250 is implemented by a processor such as a digital signal processor (DSP) and its control program. The sound generation section 250 generates a sound signal of effect sound, background music (BGM), and various types of operation sound relating to the game based on the processing result of the game calculation section 210, and outputs the generated sound signal to the sound output section 350.

The sound output section 350 is a device which outputs effect sound and BGM based on the sound signal input from the sound generation section 250. In FIG. 1, the speaker 1224 of the video monitor 1220 corresponds to the sound output section 350.

The image generation section 260 is implemented by a processor such as a digital signal processor (DSP), its control program, a drawing frame IC memory such as a frame buffer, and the like. The image generation section 260 generates a game image in units of frame time (1/60 seconds) based on the processing result of the game calculation section 210, and outputs the image signal of the generated game image to the image display section 360.

The image display section 360 displays a game image based on the image signal input from the image generation section 260. For example, the image display section 360 may be implemented by an image display device such as a flat panel display, a cathode-ray tube (CRT), a projector, or a head mount display. In FIG. 1, the display 1222 of the video monitor 1220 corresponds to the image display section 360.

The communication control section 270 performs a data communication process to achieve data exchange with an external device via the communication section 370.

The communication section 370 connects with a communication line 2 at a physical level to achieve communication. For example, the communication section 370 is implemented by a transceiver, a modem, a terminal adapter (TA), a jack for a communication cable, a control circuit, or the like. In FIG. 1, the communication device 1212 and the short-distance wireless module 1214 correspond to the communication section 370.

The storage section 500 stores a system program for implementing each function for causing the processing section 200 to integrally control the game device 1200, a game program necessary for causing the processing section 200 to execute the game, and various types of data. The storage section 500 is used as a work area for the processing section 200, and temporarily stores the results of calculations executed by the processing section 200 according to various programs, data input from the operation section 100, and the like. The function of the storage section 500 is implemented by an IC memory such as a RAM or ROM, a magnetic disk such as a hard disk, an optical disk such as a CD-ROM or DVD, or the like.

In this embodiment, the storage section 500 stores a game program 510. The game program 510 is a program which is read and executed by the processing section 200 and causes the processing section 200 to function as the game calculation section 210. The game program 510 further includes a main lever input processing program 512, a sublever input processing program 514, an automatic view point movement processing program 516, and a pointer position display control program 518. These programs respectively cause the processing section 200 to function as a main lever input processing section 212, a sublever input processing section 214, an automatic view point movement control section 516, and a pointer position display control section 518.

The storage section 500 stores game space setting data 530, player's character setting data 532, NPC setting data 534, weapon item setting data 536, defense item setting data 538, and view point camera setting data 550 as data provided in advance. The storage section 500 also stores player's character control data 560, view point camera control data 562, pointer display position data 564, and NPC control data 566 as data arbitrarily rewritten during the game.

As the game space setting data 530, model data and texture data for forming the game space as a battlefield in the FPS game in the virtual space is stored.

As the player's character setting data 532, data for displaying the player's character PC and controlling the operation of the player's character PC is stored. For example, model data, texture data, motion data, the moving speed, the hit point (life value) initial value, and the like are stored as the player's character setting data 532.

As the NPC setting data 534, data necessary for displaying and controlling a non-player's character (NPC) automatically controlled by a computer is stored. For example, model data, texture data, motion data, initial arrangement position data, movement pattern data, the moving speed, the hit point (life value) initial value, and the like of an enemy character are stored as the NPC setting data 534.

As the weapon item setting data 536, data necessary for displaying, activating (using), and selecting the weapon 22 which appears in the game is stored while being associated with weapon identification information. For example, information such as model data and texture data of the weapon 22, number of bullets loaded, the degree of damage applied to a character hit by the weapon 22, model data and texture data of an object necessary for an effect display such as a muzzle flash during use, sound data, and the icon and the name of the weapon displayed during the weapon selection process is stored as the weapon item setting data 536.

As the defense item setting data 538, data necessary for displaying and activating (using) the protector 24 which appears in the game is stored while being associated with protector identification information. For example, model data and texture data for displaying the protector 24, a defense capability value whereby the damage applied from the enemy is canceled, and the like are stored as the defense item setting data 538.

The setting value of the view point camera CM is stored as the view point camera setting data 550. For example, the relative arrangement position with respect to the player's character PC, the focal length of the lens, and the like are stored as the view point camera setting data 550.

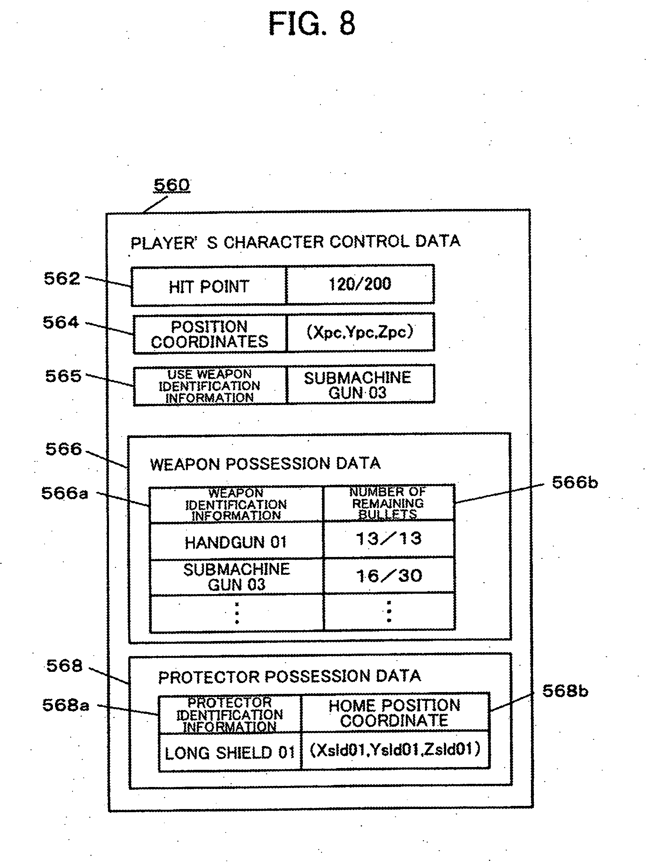

Information relating to the player's character PC necessary for proceeding with the game is stored as the player's character control data 560. As shown in FIG. 8, the player's character control data 560 includes the present hit point 562, position coordinates 564 of the local origin (representative point) of the player's character PC in the virtual space, use weapon identification information 565 which stores identification information of the weapon item used, and weapon possession data 566 and protector possession data 568 in which the weapon item and the defense item currently possessed by the player's character are registered, for example.

As the weapon possession data 566, weapon identification information 566a and the number of remaining bullets 566b of the weapon item are stored while being associated with each other. In the example shown in FIG. 8, "submachine gun 03" indicates that 30 bullets can be loaded and the number of remaining bullets is 16. The weapon item registered in the weapon possession data 566 becomes a selection candidate in the weapon selection process.

As the protector possession data 568, protector identification information 568a and home position coordinates 568b of the protector 24 currently used by the player's character PC are stored while being associated with each other. The home position coordinates 568b correspond to the initial position coordinates of the protector. For example, the coordinate value based on the local origin of the player's character PC is stored as the home position coordinates 568b.

As the player's character control data 560, information relating to motion control currently executed, data relating to model joint control, and the like are appropriately stored.

The arrangement and the photographing conditions of the view point camera CM are stored as the view point camera control data 562. For example, the position of the view point camera CM in the game space, the position values around the XYZ axes, the focal length, and the like are stored as the view point camera control data 562.

As the pointer display position data 564, the coordinate value in the screen coordinate system for displaying the pointer 2 on the game screen is stored.

As the NPC control data 566, information relating to the non-player's character (NPC) (e.g. enemy character) necessary for proceeding with the game is stored. The NPC control data 566 corresponds to the player's character control data 560.

### <Operation>

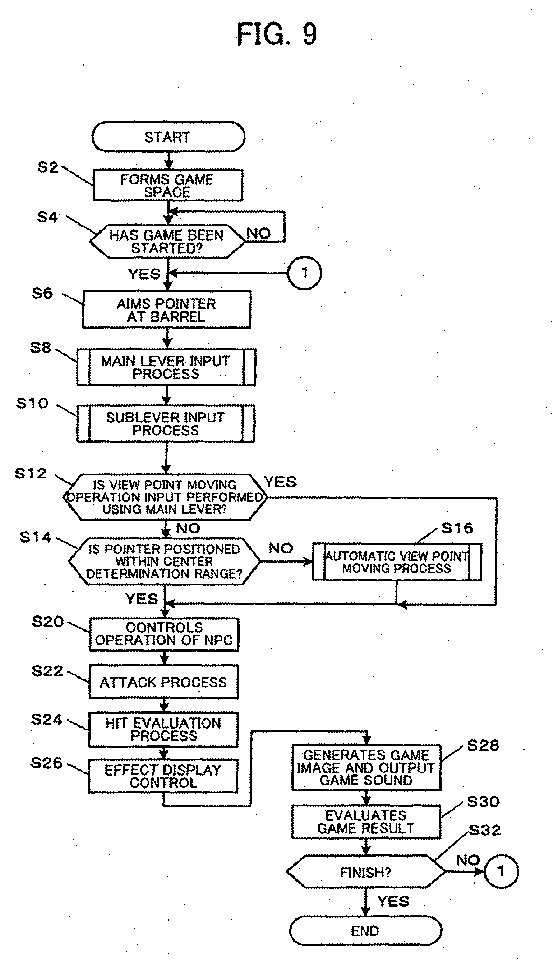

The operation according to the invention is described below. FIG. 9 is a flowchart illustrative of the flow of the process according to this embodiment.

As shown in FIG. 9, the processing section 200 forms the game space in the virtual space referring to the game space setting data 530 (step S2). This process also includes disposing the player's character PC in the virtual space referring to the player's character setting data 532, disposing the NPC such as the enemy character referring to the NPC setting data 534, and disposing the view point camera CM referring to the view point camera setting data 550.

When the game has started (YES in step S4), the processing section 200 calculates the image-coordinate-system coordinates on the display 1222 at which the barrel 1231 is aimed, and displays the pointer 2 at the calculated position (step S6). The processing section 200 then performs the main lever input process to control the player's character PC and the view point camera CM according to the operation input performed using the main lever 1250 (step S8).

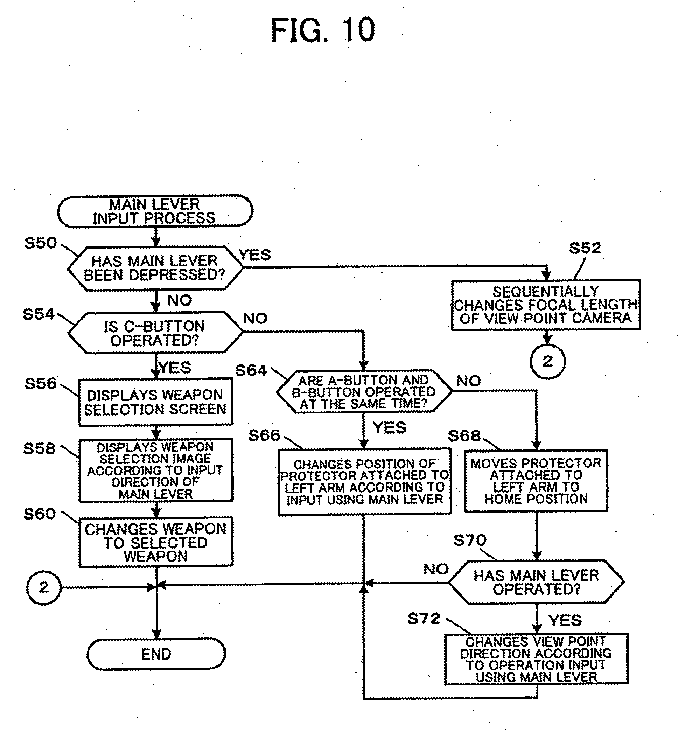

FIG. 10 is a flowchart illustrative of the flow of the main lever input process according to this embodiment. In the main lever input process, the processing section 200 determines whether or not the main lever 1250 has been depressed, as shown in FIG. 10 (step S50). When the processing section 200 has determined that the main lever 1250 has been depressed (YES in step S50), the processing section 200 sequentially changes the focal length of the lens of the view point camera CM between the initial setting and the telephotographing setting with a longer focal length according to the view point camera setting data 550 (step S52). The focal length setting is stored as the view point camera control data 562.

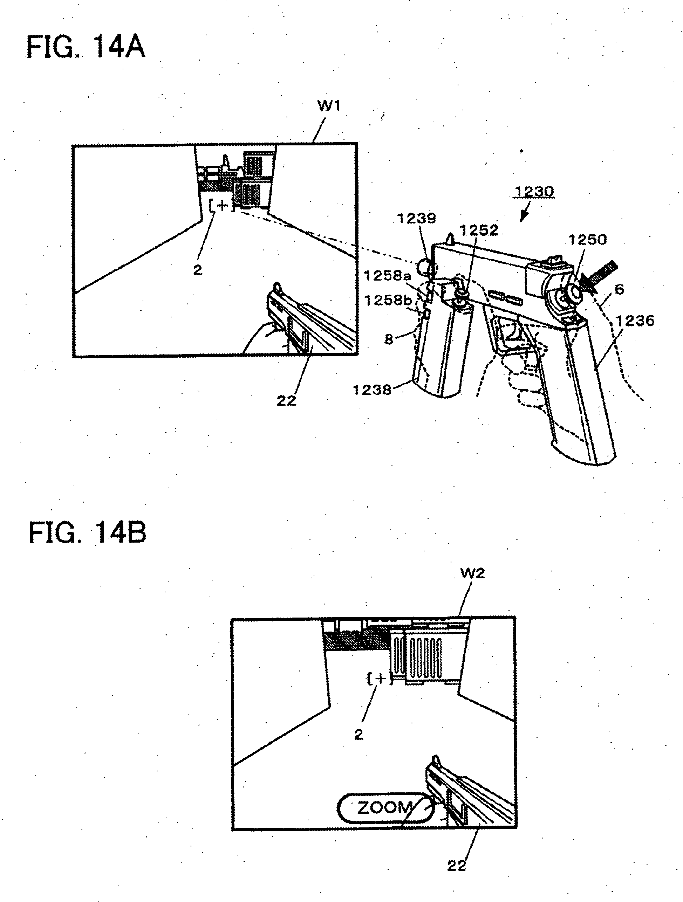

The change in the focal length of the view point camera is displayed as shown in FIG. 14, for example. A first-person view point image is normally displayed in which part of the weapon 22 possessed by the player's character PC is displayed at the corner of the screen, as represented by a game screen W 1 shown in FIG. 14A. When the player has depressed the main lever 1250 in the lever axial direction, the focal length of the view point camera CM is changed to the telephotographing setting, as represented by a game screen W2 shown in FIG. 14B, so that an image is displayed as if closely observing the portion around the pointer 2 or observing the screen through a sighting device with a telephotographing function.

The processing section 200 determines whether or not the C-button 1258c is operated (step S54). When the processing section 200 has determined that the C-button 1258c is operated (YES in step S54), the processing section 200 displays the weapon currently possessed by the player's character PC to be selectable referring to the weapon possession data 566 of the player's character control data 560 (step S56). The processing section 200 displays the weapon selection image according to the operation input performed using the main lever 1250 (step S58), and stores the weapon identification information of the currently selected weapon item as the use weapon identification information 565 to change the weapon used (step S60). The display model of the weapon 22 possessed by the player's character PC is referred to from the weapon item setting data 536 and replaced along with the change in the weapon used.

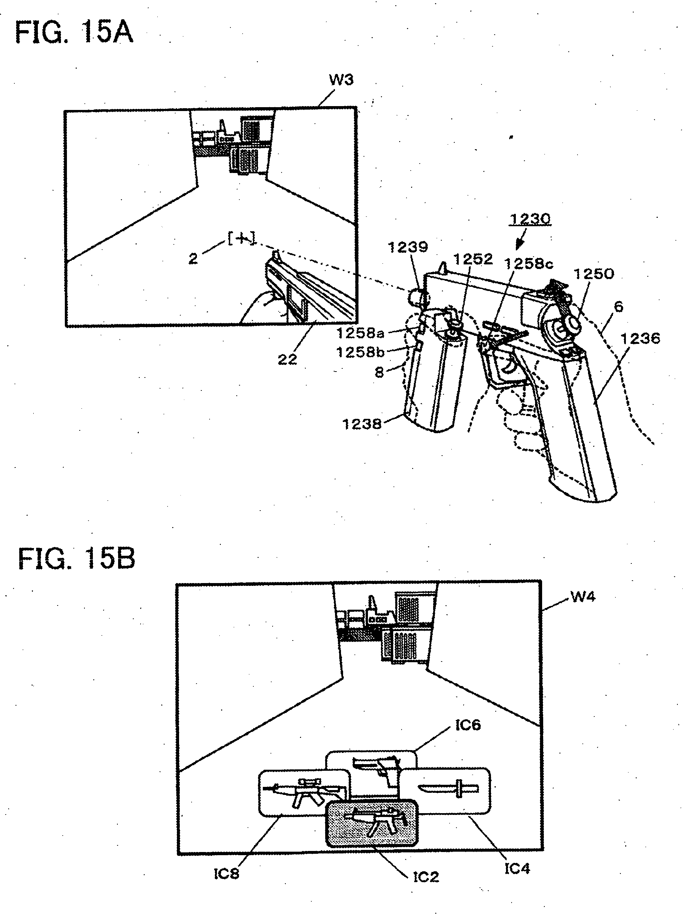

The weapon selection operation is displayed as shown in FIG. 15, for example. When the player has performed an operation input by pressing the C-button 1258c when a normal game screen W3 is displayed, as shown in FIG. 15A, icons IC2 to IC8 of the weapon items registered in the weapon possession data 566 are displayed on the screen so that the icons IC2 to IC8 are arranged in a circle and can be selected, as represented by a game screen W4 shown in FIG. 15B. The icon of the weapon item is obtained referring to the weapon item setting data 536.

In the example shown in FIG. 15B, the icon IC2 of the submachine gun currently used is highlighted. For example, when the player operates the main lever 1250 upward in this state, the icon IC6 of a handgun disposed above the icon IC2 is selected so that the weapon used is changed from the submachine gun to the handgun. When the player has released the C-button 1258c, the icons of the weapon items disappear and a normal game screen is displayed.

When the processing section 200 has determined that the C-button 1258c is not operated (NO in step S54), the processing section 200 determines whether or not the A-button 1258a and the B-button 1258b are operated at the same time (step S64). When the processing section 200 has determined that the A-button 1258a and the B-button 1258b are operated at the same time (YES in step S64), the processing section 200 changes the position of the protector 24 attached to the player's character PC according to the operation input performed using the main lever 1250 (step S66).

When the processing section 200 has determined that the A-button 1258a and the B-button 1258b are not operated at the same time (NO in step S64), the processing section 200 moves the protector 24 to the home position (step S68), and determines whether or not the main lever 1250 is operated (step S70).

When the processing section 200 has determined that the main lever 1250 is operated (YES in step S70), the processing section 200 changes the direction of the view point camera CM according to the operation input performed using the main lever 1250. Specifically, the processing section 200 changes the view point direction (step S72).

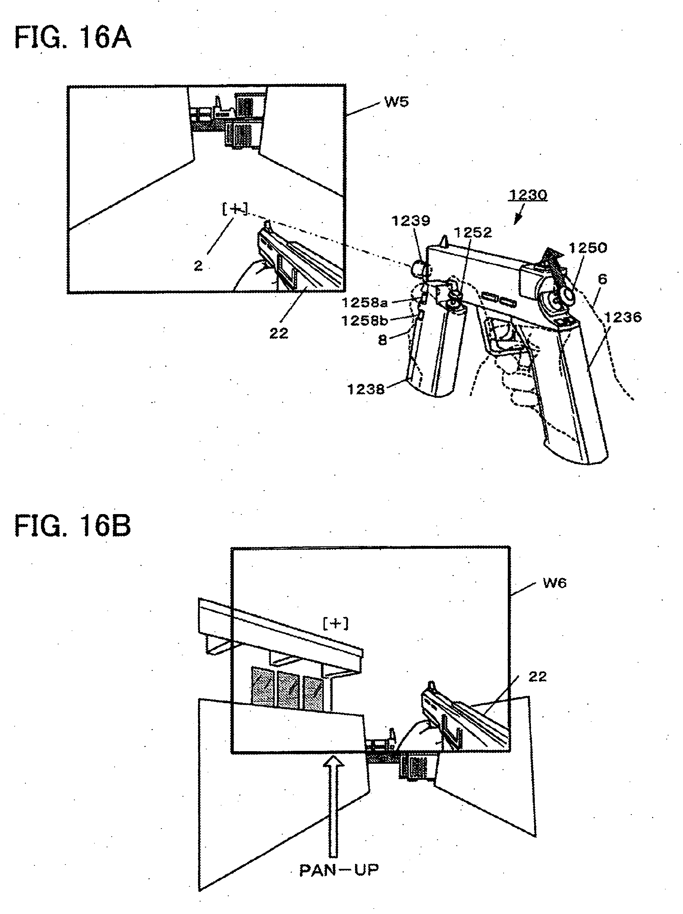

The change in the view point direction is displayed as shown in FIG. 16, for example. When the player has operated the main lever 1250 upward without pressing the C-button 1258c or pressing the A-button 1258a and the B-button 1258b at the same time, as shown in FIG. 16A, the view point camera CM faces upward (PAN-UP), as shown in FIG. 16B, whereby the game screen changes from a game screen W5 to a game screen W6 so that the game space is displayed as if the player's character PC had looked up.

Again referring to the flowchart shown in FIG. 9, the processing section 200 then performs the sublever input process to control the player's character PC and the view point camera CM according to the operation input performed using the sublever 1252 (step S10).

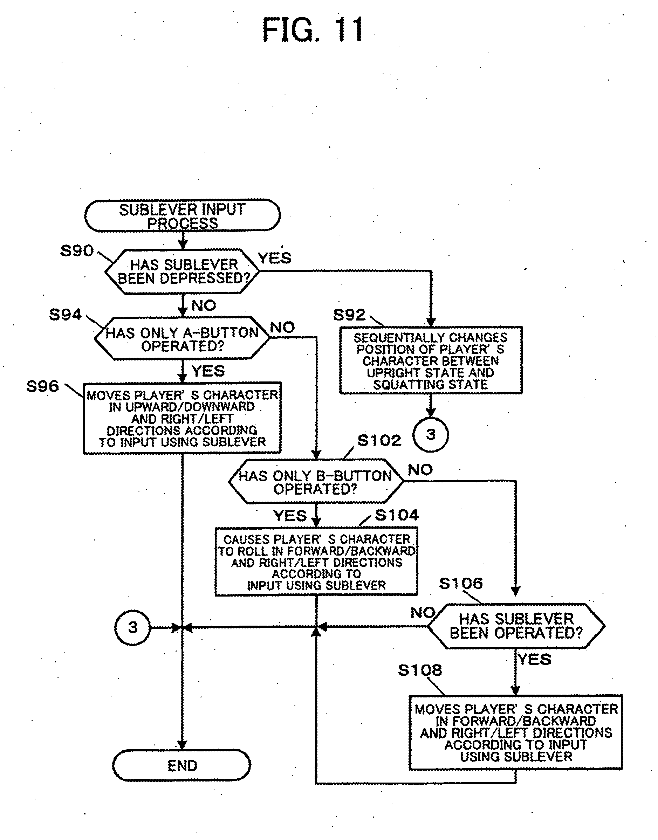

FIG. 11 is a flowchart illustrative of the flow of the sublever input process according to this embodiment. In the sublever input process, the processing section 200 determines whether or not the sublever 1252 has been depressed, as shown in FIG. 11 (step S90). When the processing section 200 has determined that the sublever 1252 has been depressed (YES in step S90), the processing section 200 sequentially changes the position of the player's character PC between the upright state and the squatting state (step S92).

When the processing section 200 has determined that the sublever 1252 has not been depressed (NO in step S90), the processing section 200 determines whether or not the A-button 1258a is independently operated (step S94). When the processing section 200 has determined that the A-button 1258a is operated and the B-button 1258b is not operated (YES in step S94), the processing section 200 controls the movement of the player's character PC in the upward/downward and right/left directions according to the direction of the operation input performed using the sublever 1252 (step S96).

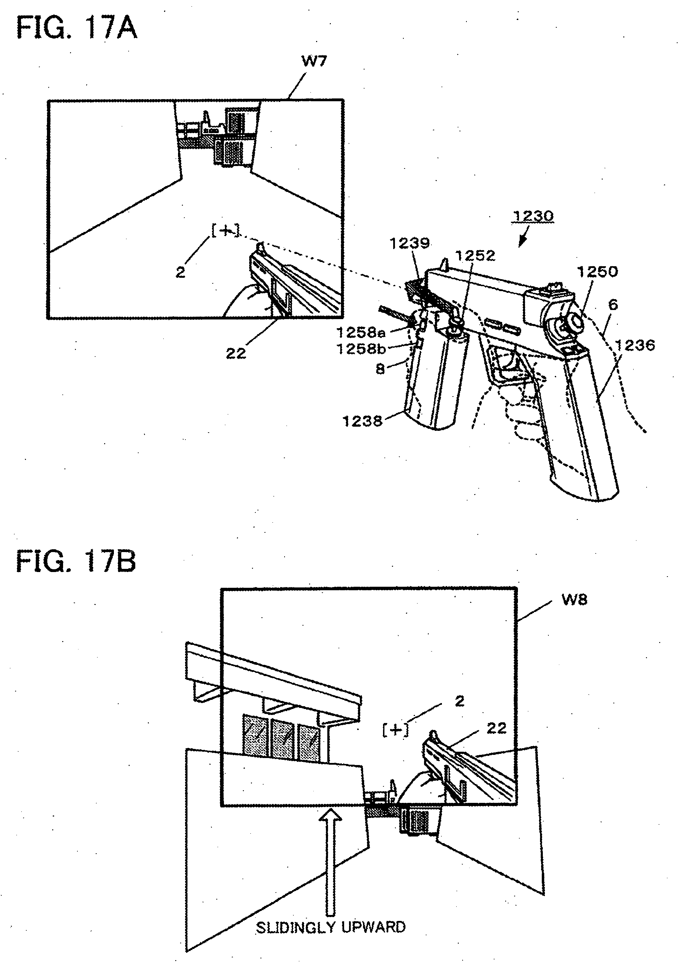

The movement of the player's character PC in the upward/downward and right/left directions is displayed as shown in FIG. 17, for example. When the player has operated the sublever 1252 forward (upward) while pressing the A-button 1258a without pressing the B-button 1258b, as shown in FIG. 17A, the player's character PC moves upward in the game space. As a result, an image is displayed in which the view point slidingly moves upward from the state indicated by a game screen W7 to the state indicated by a game screen W8, as shown in FIG. 17B.

When the processing section 200 has determined that only the B-button 1258b is operated (i.e., the A-button 1258a is not operated and the B-button 1258b is operated (NO in step S94→YES in step S102), the processing section 200 controls the player's character PC according to the direction of the operation input performed using the sublever 1252 so that the player's character PC rolls in the forward/backward and right/left directions (step S104). In this embodiment, the player's character PC makes a defense action by means of a forward roll or a cartwheel.

When the processing section 200 has determined that the A-button 1258a and the B-button 1258b are not operated (step S102), the processing section 200 determines whether or not the sublever 1252 is operated. When the processing section 200 has determined that the sublever 1252 is operated (YES in step S106), the processing section 200 moves the player's character PC in the forward/backward and right/left directions according to the direction of the operation input performed using the sublever 1252 (step S108).

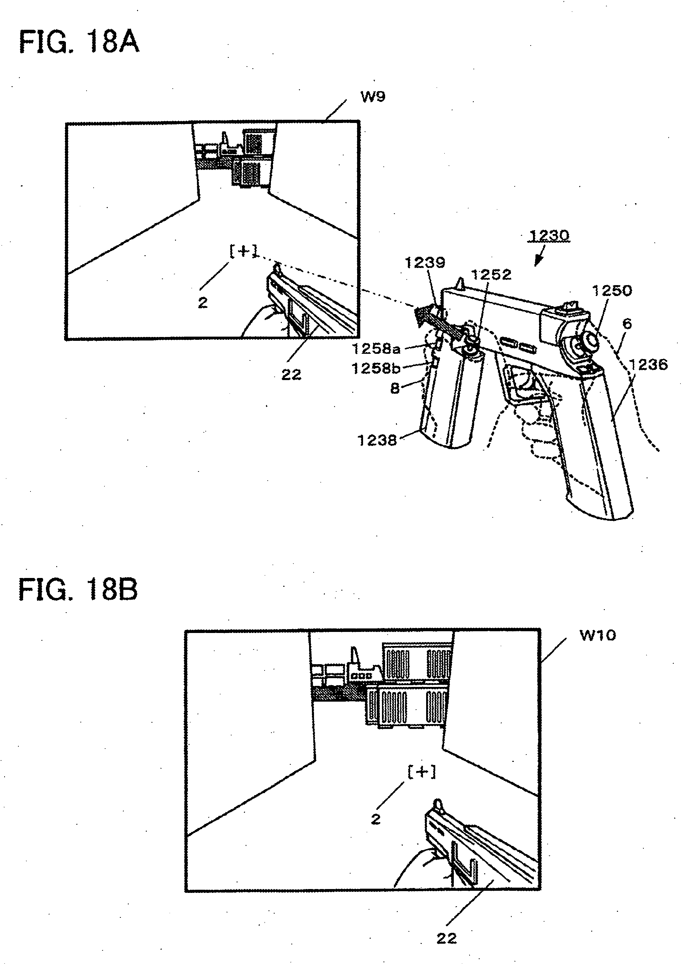

The movement of the player's character PC in the forward/backward and right/left directions is displayed as shown in FIG. 18, for example. When the player has operated the sublever 1252 forward (upward) without pressing the A-button 1258a and the B-button 1258b, as shown in FIG. 18A, the player's character PC moves forward in the game space. As a result, an image is displayed in which the view point moves forward from the state indicated by a game screen W9 to the state indicated by a game screen W10, as shown in FIG. 18B.

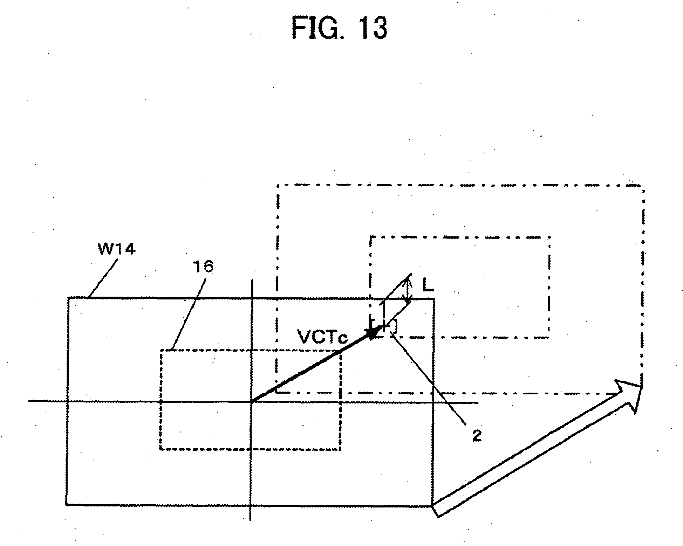

Again referring to the flowchart shown in FIG. 9, the processing section 200 then determines whether or not the movement of the view point is controlled using the main lever 1250 (step S12). When the processing section 200 has determined that the movement of the view point is not controlled using the main lever 1250 (NO in step S12), the processing section 200 determines whether or not the pointer 2 on the game screen is positioned within a center determination range 16 set at the center of the game screen W14, as shown in FIG. 13, referring to the pointer display position data 564 (step S14).

When the processing section 200 has determined that the pointer 2 is not positioned within the center determination range 16 (i.e., the pointer 2 is positioned in a peripheral portion of the game screen) (NO in step S14), the processing section 200 performs the automatic view point moving process (step S16).

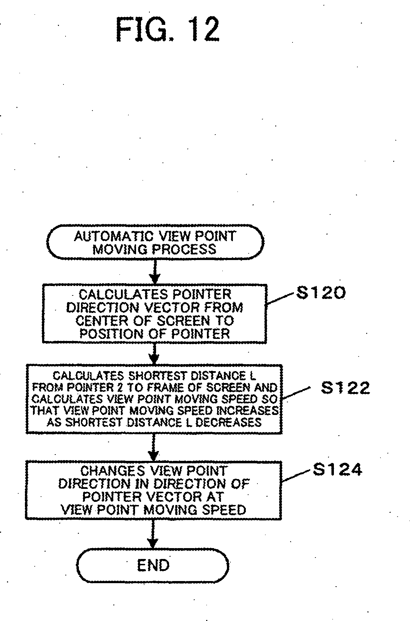

FIG. 12 is a flowchart illustrative of the flow of the automatic view point moving process according to this embodiment. In the automatic view point moving process shown in FIG. 12, the processing section 200 calculates a pointer direction vector VCTc from the center of the screen to the position of the pointer 2, as shown in FIG. 13, for example (step S120). The processing section 200 calculates the shortest distance L from the pointer 2 to the frame of the screen, and calculates the view point moving speed so that the view point moving speed increases as the calculated shortest distance L decreases (step S122). The processing section 200 controls the view point camera so that the view point direction moves in the direction of the pointer vector VCTc at the calculated view point moving speed (step S124).

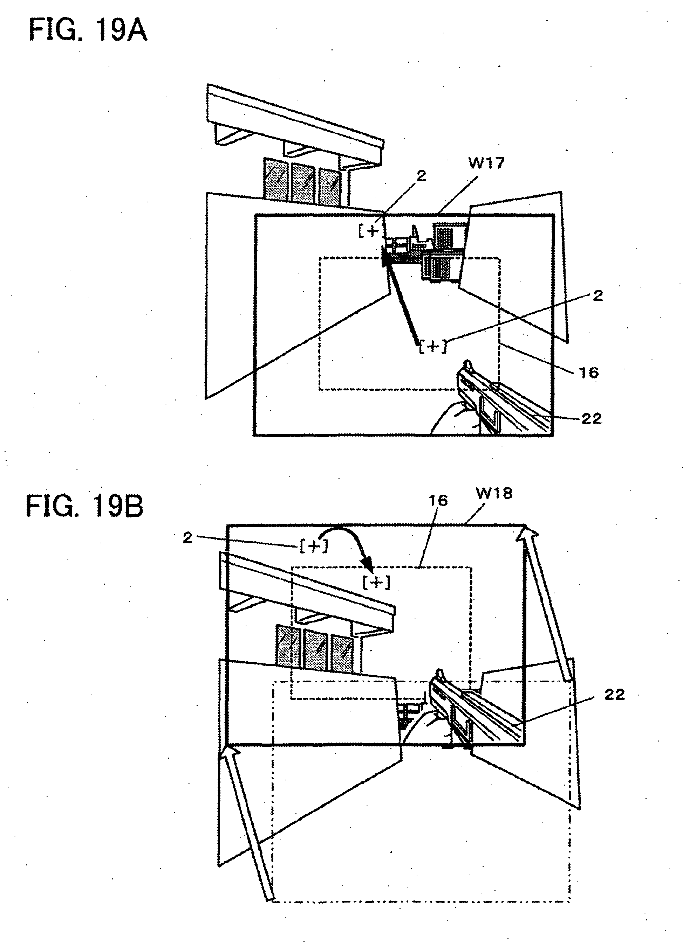

The automatic view point moving process is displayed as shown in FIG. 19, for example. As represented by a game screen W 17 shown in FIG. 19A, when the player has aimed the muzzle 1231 of the gun-type controller 1230 at the peripheral portion of the game screen, the pointer 2 moves toward the frame of the screen. As a result, the direction of the view point camera is automatically moved in the direction at which the barrel 1232 is aimed by the automatic view point moving process, whereby an image is displayed as represented by a game screen W19 shown in FIG. 19B. When the player moves the muzzle 1231 close to the center of the game screen, the pointer 2 is positioned within the center determination range 16 so that the view point direction of the view point camera is not automatically controlled, whereby the view point direction can be stopped in a state indicated by the game screen W 18.

Again referring to the flowchart shown in FIG. 9, the processing section 200 controls the operation of the NPC such as the enemy character in the same as in a known FPS game (step S20), and performs the attack process (step S22). Specifically, suppose that the player's character PC has fired the gun-type controller 1230 aiming at the pointer 2 at the operation timing of the trigger 1234. When the enemy character has performed an attack operation, the enemy character has fired the weapon aiming at the player's character PC. The processing section 200 then performs a hit evaluation process, and decrements the hit point when the player's character PC has been shot (step S24). The processing section 200 controls display of the bullet fired during the attack and the impact effects (step S26).

The processing section 200 generates an image of the virtual space viewed from the view point camera CM, synthesizes various information displays (e.g. hit point value, number of remaining bullets, orientation, and game play time) with the generated image to generate a game image, and displays the resulting game image. The processing section 200 generates game sound and causes the generated game sound to be output (step S28).

The processing section 200 evaluates the game results (step S30). When specific game finish conditions have been satisfied (YES in step S32), the processing section 200 finishes the game. When specific game finish conditions have not been satisfied (NO in step S32), the processing section 200 returns to the step S6.

### <Hardware configuration>

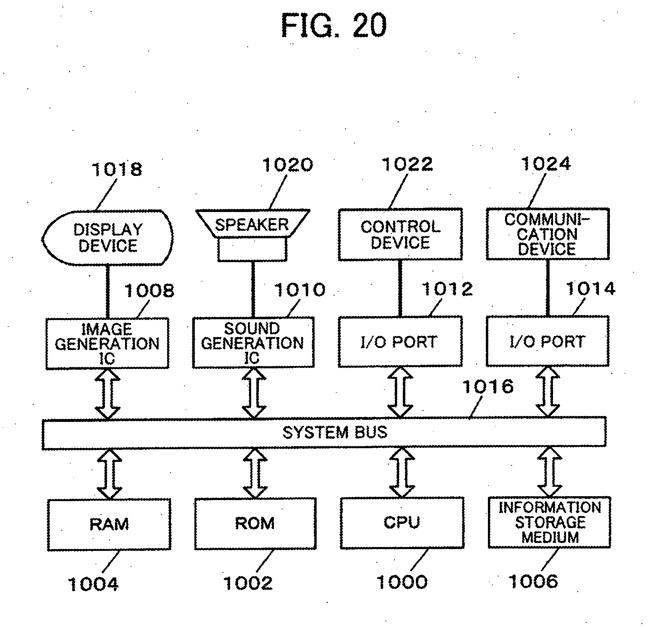

FIG. 20 is a view illustrative of an example of a hardware configuration for implementing the consumer game device 1200 according to this embodiment. In the consumer game device 1200, a CPU 1000, a ROM 1002, a RAM 1004, an information storage medium 1006, an image generation IC 1010, a sound generation IC 1008, and I/O ports 1012 and 1014 are connected via a system bus 1016 so that data can be input and output to one another. A control device 1022 is connected with the I/O port 1012, and a communication device 1024 is connected with the I/O port 1014.

The CPU 1000 controls the entire device and performs various types of data processing according to a program stored in the information storage medium 1006, a system program (e.g. initialization information of the main body) stored in the ROM 1002, a signal input from the control device 1022, and the like.

The RAM 1004 is a storage section used as a work area for the CPU 1000 and the like, and stores given information in the information storage medium 1006 and the ROM 1002, the calculation results of the CPU 1000, and the like.

The information storage medium 1006 mainly stores a program, image data, sound data, play data, and the like. As the information storage medium, a memory such as a ROM, a hard disk, a CD-ROM, a DVD, an IC card, a magnetic disk, an optical disk, or the like is used. The information storage medium 1006 corresponds to the storage section 500 shown in FIG. 6.

Sound and an image can be suitably output using the image generation IC 1008 and the sound generation IC 1010 provided in the device.

The mage generation IC 1008 is an integrated circuit which generates pixel information according to instructions from the CPU 1000 based on information transmitted from the ROM 1002, the RAM 1004, the information storage medium 1006, and the like. An image signal generated by the mage generation IC 1008 is output to a display device 1018. The display device 1018 is implemented by a CRT, an LCD, an ELD, a plasma display, a projector, or the like. The display device 1018 corresponds to the image display section 360 shown in FIG. 6.

The sound generation IC 1010 is an integrated circuit which generates a sound signal corresponding to the information stored in the information storage medium 1006 and the ROM 1002 and sound data stored in the RAM 1004 according to instructions from the CPU 1000. The sound signal generated by the sound generation IC 1010 is output from a speaker 1020. The speaker 1020 corresponds to the sound output section 350 shown in FIG. 6.

The control device 1022 is a device for the player to input game operations. The function of the control device 1022 is implemented by hardware such as a lever, a button, and a housing. The control device 1022 corresponds to the operation input section 100 shown in FIG. 6.

The communication device 1024 exchanges information utilized in the instrument with the outside. The communication device 1024 is utilized to exchange given information corresponding to a program or the like with another device. The communication device 1024 corresponds to the communication section 370 shown in FIG. 6.

The above-described processes such as the game process are implemented by the information storage medium 1006 which stores the game program 502 shown in FIG. 6 and the like, and the CPU 1000, the image generation IC 1008, the sound generation IC 1010, and the like which operate according to these programs. The CPU 1000, the image generation IC 1008, and the sound generation IC 1010 correspond to the processing section 200 shown in FIG. 6. The CPU 1000 mainly corresponds to the game calculation section 210. The image generation IC 1008 mainly corresponds to the image generation section 260. The sound generation IC 1010 mainly corresponds to the sound generation section 250.

The processes performed by the image generation IC 1008, the sound generation IC 1010, and the like may be executed by the CPU 1000, a general-purpose DSP, or the like by means of software. In this case, the CPU 1000 corresponds to the processing section 200 shown in FIG. 6.

The above configuration and processes enable the player to play the FPS game using the gun-type controller 1230 imitating a weapon and held with both hands on the front side and the rear side as an operation input device. In the gun-type controller 1230, the main lever 1250 and the sublever 1252 are respectively provided near the main grip 1236 and the subgrip 1238 within a range reached by the finger. The trigger 1234 is provided near the main grip 1236. The player's character PC (game character), the view point camera CM, and shooting are controlled based on the operation signals from the main lever 1250, the sublever 1252, and the trigger 1234.

Specifically, the player can perform at least two direction inputs and the weapon item use timing input necessary for playing the FPS game while holding the game controller as if using an actual weapon. Therefore, an intuitive and smooth operation input suitable for the FPS game can be realized, differing from universal game controllers provided to consumer game devices.

In particular, when assigning the operations as described in this embodiment, the attack operations can be collectively assigned to the main grip 1236 and the movement operations can be collectively assigned to the subgrip 1238 by assigning the operation of the view point camera CM to the main lever 1250 and assigning the operation of the player's character PC to the sublever 1252, whereby a simple operation system can be achieved, thereby contributing to an intuitive and smooth operation input.

Moreover, since the main lever 1250 is operated in the upward/downward and right/left directions and the sublever 1252 is operated in the forward/backward and right/left directions with respect to the player, the operation direction of the main lever 1250 coincides with the operation of the view point (i.e., upward/downward and right/left directions with respect to the game screen) and the operation direction of the sublever 1252 coincides with the movement of the player's character PC (i.e., forward/backward and right/left directions with respect to the game screen), whereby a more intuitive and smoother operation input can be realized.

### <Modification>

The embodiments of the invention have been described above. Note that the application of the invention is not limited to the above embodiments. Various modifications and variations may be made without departing from the spirit and scope of the invention.

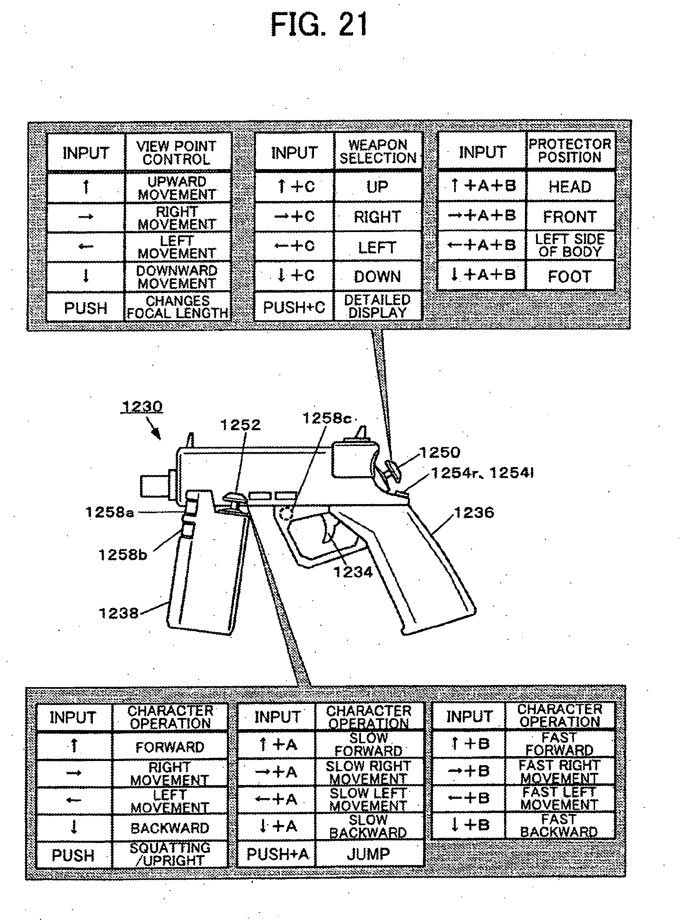

For example, the operations of the player's character PC and the view point camera CM assigned to the main lever 1250 and the sublever 1252 are not limited to the above-described operations. It is possible to arbitrarily assign the operations to the main lever 1250 and the sublever 1252. Specifically, a configuration may be employed in which the movement of the player's character PC in the upward/downward and right/left directions is assigned to the main lever 1250 and the movement of the player's character PC in the forward/backward directions is assigned to the sublever 1252, as shown FIG. 21. In this case, the view point is moved by the automatic view point moving process according to the above embodiment. Since the main lever 1250 is operated in the upward/downward and right/left directions, the player can intuitively and smoothly move the player's character PC in the upward/downward and right/left directions. Moreover, the setting can be easily changed by merely changing the branch conditions for the main lever input process and the sublever input process and the control performed in the steps after the branch (e.g. steps S58, S66, S68, S70, and S72 in FIG. 10 and steps S96, S104, and S108 in FIG. 11).

As shown in FIG. 21, the movement in the forward/backward and left/right directions may be assigned while changing the moving speed by the combination of the sublever 1252, the A-button 1258a, and the B-button 1258b. In the example shown in FIG. 21, the movement in the forward/backward and left/right directions at a speed lower than the normal speed becomes possible by operating the sublever 1252 while pressing the A-button 1258a. This is effective for finely adjusting the movement target position, such as when it is desired to move the character to the edge of a roof. The movement in the forward/backward and left/right directions at a speed higher than the normal speed becomes possible by operating the sublever 1252 while pressing the B-button 1258b. Since the movement operation in the forward/backward and left/right directions is collectively assigned to the sublever 1252 and the moving speed can be promptly adjusted by merely operating the A-button 1258a or the B-button 1258b, an extremely excellent operability is achieved.

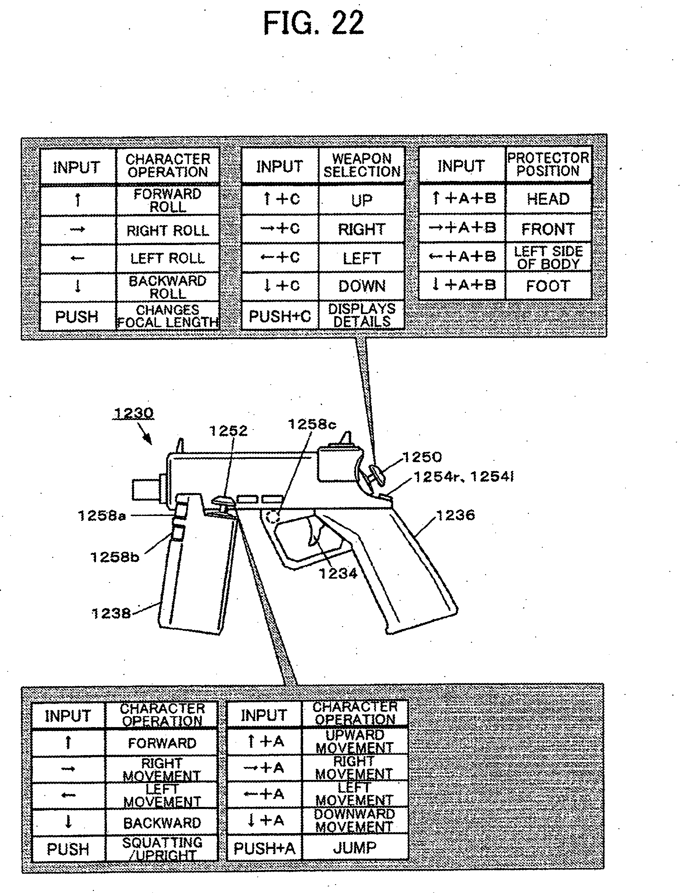

As shown in FIG. 22, a special movement accompanying a specific operation such as a roll movement may be assigned to the main lever 1250 and the normal movement may be assigned to the sublever 1252 provided that the view point is moved by the automatic view point moving process according to the above embodiment.

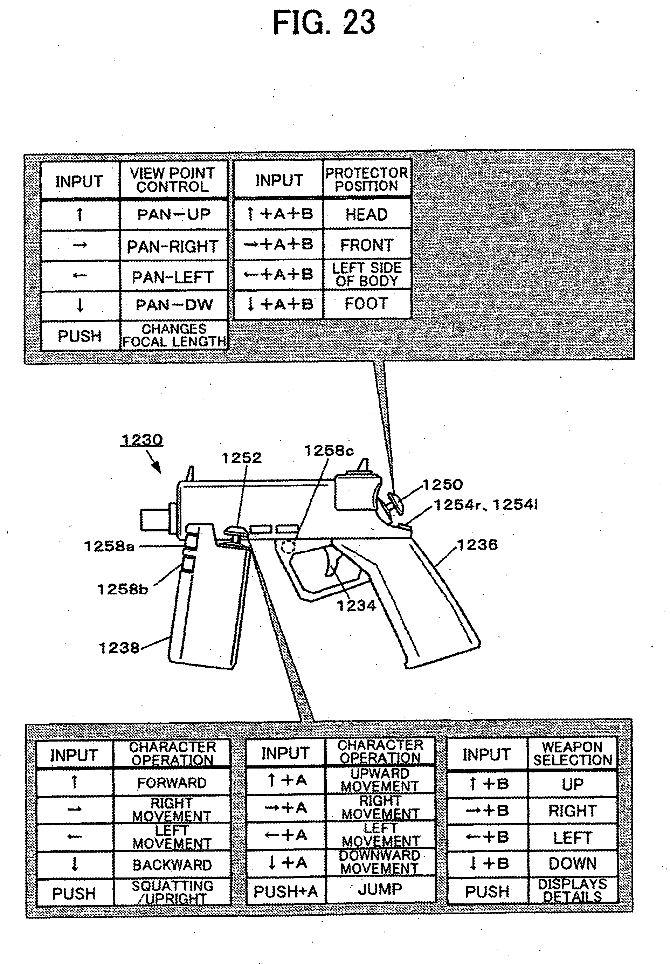

As shown in FIG. 23, the weapon selection operation may be assigned to the sublever 1252. In this case, the player cannot move the character when the selecting the weapon. When changing the weapon in the real world, it is necessary to stop at a moment and change the equipment, whereby the movement is limited. Since such a situation can be reproduced in the game, reality can be improved while maintaining an excellent operability.

As yet another example, the weapon may not be selected, and a specific command may be selected and issued instead of performing the weapon selection operation input. For example, when the player's character PC forms a team with another character (NPC) to cooperate in fighting against the enemy, instructions for the teammate character, such as backing instructions, rush instructions, or retreat instructions, may be selected and issued. Alternatively, an action (e.g. magic or bomb) may be selected and issued which affects the entire game stage or a specific range of the game stage. The main lever 1250 or the sublever 1252 may be used to select and issue the instructions.

A configuration may be employed in which the player can select one of such different assignment configurations before starting the game, or the player can arbitrarily edit the assignment.

The game controller to which the invention is applied can also be used for a known gun shooting game in the same manner as the FPS game.

The above embodiment is configured so that the gun-type controller to which the invention is applied is used for a consumer game device. Note that the invention is not limited thereto. The gun-type controller to which the invention is applied may be used in a state in which the gun-type controller is connected to another video game device (e.g. business game device or personal computer).

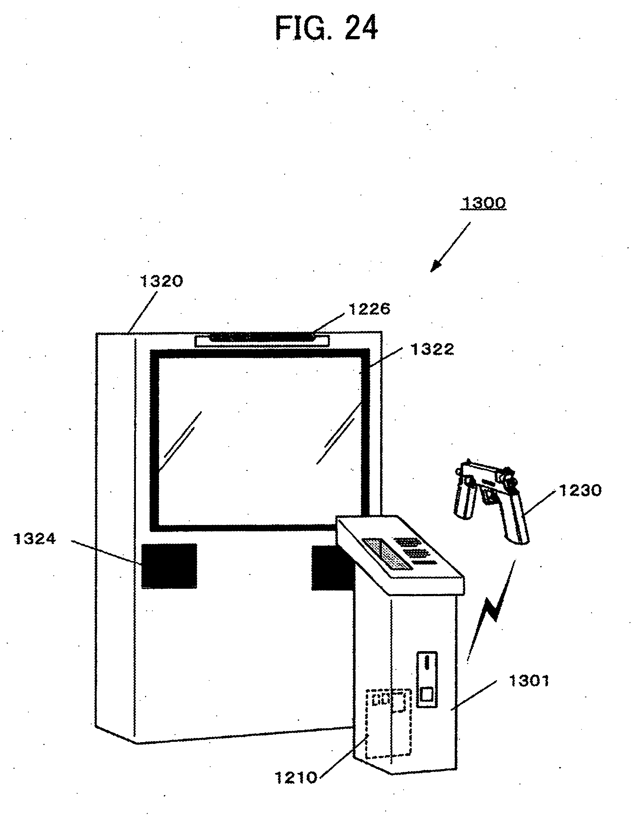

FIG. 24 is a system configuration diagram illustrative of a configuration example of an arcade game device 1300 to which the invention is applied, for example. The same elements as in the above embodiment are indicated by the same symbols. Description of these elements is omitted. As shown in FIG. 24, a game device main body 1301 of the arcade game device 1300 includes the control unit 1210 provided with a CPU, an image processing LSI, an IC memory, and the like. The control unit 1210 reads a game program and setting data from a hard disk, IC memory, and the like provided in the control unit 1210, and performs game calculations based on the operation input performed using the gun-type controller 1230 to execute a given video game.

A game image and game sound generated by the control unit 1210 of the arcade game device 1300 are output to a video monitor 1320 connected to the arcade game device 1300 via a signal cable. The player enjoys the game while watching the game image displayed on a display 1322 of the video monitor 1320 and listening to the game sound such as BGM and effect sound output from a speaker 1324.

Although only some embodiments of the invention have been described above in detail, those skilled in the art would readily appreciate that many modifications are possible in the embodiments without materially departing from the novel teachings and advantages of the invention. Accordingly, such modifications are intended to be included within the scope of the invention.

## Claims

1. A program for causing a computer (1201) to control a game character (PC) disposed in a game space and an item (22) possessed by the galne character (PC) and generate an image of the game space viewed from a virtual camera (CM) to control a game process, the image in use being displayed on a game screen (1222), the computer (1201) being connected via communication with a game controller (1230) which has a specific shape held with both hands during use and includes:
a barrel equivalent portion (1232);
a front-side holding section (1238) and a rear-side holding section (1236) respectively provided in a from portion and a rear portion of the game controller (1230). the front-side holding section (1238) being held with a right or left hand and the rear-side holding section (1236) being held with the other hand;
a trigger (1234) provided within a range in which the forefinger of the hand holding the rear-side holding section (1236) reaches the trigger (1234);
a front-side direction input section (1252) operated by a finger of the hand holding the front-side holding section (1238):
a rear-side direction input section (1250) operated by a finger of the hand holding the rear-side holding section (1236):
an operation signal output section (100) which outputs operation signals of the front-side direction input section (1252), the rear-side direction input section (1250), and the trigger (1234) corresponding to inputs performed using the front-side direction input section (1252), the rear-side direction input section (1250), and the trigger (1234), and
a detection mechanism which detects position coordinates on the game screen indicated by a barrel direction of the barrel equivalent portion (1232), the detection mechanism including an image detection section (1239),
the program causing the computer to function as:
an operation signal input section (270, 370) which controls the communication with the game controller (1230) and to which the operation signal is input;
a character control section (210) which controls the game character (PC) based on the operation signal of the front-side direction input section (1252) and/or the rear-side direction input section (1250);
an actuation control section (200, S22) which controls actuation of the item (22) based on the operation signal of the trigger (1234);
a pointer marker display control section (218) which displays a pointer marker (2) on the generated image of the game space and changes a display position of the pointer marker (2) based on the detection result of the detection mechanism; and
a marker position camera control section (216) which controls a line-of-sight direction of the virtual camera (CM) when the pointer marker (2) has been positioned within a specific peripheral range of the game image.

2. The program as defined in claim 1,
wherein the character control section controls movement and/or operation of the game character based on the operation signal of one of the front-side direction input section (1252) and the rear-side direction input section (1250), and
wherein the program causes the computer to further function as a camera control section which controls a line-of-sight direction and/or an angle of view of the virtual camera based on the operation signal of the other of the front-side direction input section (1252) and the rear-side direction input section (1250).

3. The program as defined in claim 1,
wherein the character control section controls movement and/or operation of the game character based on the operation signal of one of the front-side direction input section (1252) and the rear-side direction input section (1250), and
wherein the program causes the computer to further function as a control target select section which selects an item to be controlled by the actuation control section from a plurality of items based on the operation signal of the other of the front-side direction input section (1252) and the rear-side direction input section (1250).

4. The program as defined in claim 3,
wherein the game controller (1230) further includes a specific operation button, and the operation signal output section outputs an operation signal of the operation button, and
wherein the control target select section selects the item based on the operation signal of the other of the front-side direction input section (1252) and the rear-side direction input section (1250) when the operation signal of the operation button is input.

5. The program as defined in claim 1,
wherein the game controller further includes a specific operation button, and the operation signal output section outputs an operation signal of the operation button,
wherein the character control section controls movement and/or operation of the game character based on the operation signal of one of the front-side direction input section (1252) and the rear-side direction input section (1250), and
wherein the program causes the computer to function as:
a control target select section which selects an item to be controlled by the actuation control section from a plurality of items based on the operation signal of the other of the front-side direction input section (1252) and the rear-side direction input section (1250) when the operation signal of the operation button is input; and
a camera control section which controls a line-of-sight direction and/or an angle of view of the virtual camera based on the operation signal of the other of the front-side direction input section (1252) and the rear-side direction input section (1250) when the operation signal of the operation button is not input.

6. The program as defined in claim 1,
wherein the game controller further includes a specific operation button, and the operation signal output section (100) outputs an operation signal of the operation button,
wherein the program causes the computer to function as:
a camera control section which controls a line-of-sight direction and/or an angle of view of the virtual camera based on the operation signal of one of the front-side direction input section (1252) and the rear-side direction input section ( 250); and
a control target select section which selects an item to be controlled by the actuation control section from a plurality of items based on the operation signal of the other of the front-side direction input section (1252) and the rear-side direction input section (1250) when the operation signal of the operation button is input, and
wherein the character control section control movement and/or operation of the game character based on the operation signal of the other of the front-side direction input section (1252) and the rear-side direction input section (1250) when the operation signal of the operation button is not input.

7. The program as defined in claim 1, wherein the character control section controls movement of the game character in the game space in an upward/downward direction based on the operation signal of one of the front-side direction input section (1252) and the rear-side direction input section (1250), and controls movement of the game character in the game space in a forward/backward direction based on the operation signal of the other of the front-side direction input section (1252) and the rear-side direction input section (1250).

8. The program as defined in claim 1, wherein the character control section causes the game character to perform a special movement accompanying a specific operation based on the operation signals of one of the front-side direction input section (1252) and the rear-side direction input section (1250), and causes the game character to perform a normale movement which does not accompany the specific operation based on the operation signal of the other of the front-side direction input section (1252) and the rear-side direction input section (1250).

9. The program as defined in claim 1.
wherein the game controller (1230) further includes a specific operation button, and the operation signal output section (100) outputs an operation signal of the operation button, and
wherein the character control section causes the game character to perform a special movement accompanying a specific operation based on the operation signal of the front-side direction input section (1252) and/or the rear-side direction input section (1250) when the operation signal of the operation button is input, and causes the game character to perform a normal movement which does not accompany the specific operation when the operation signal of the operation button is not input.

10. The program as defined in claim 1, wherein the character control section controls movement of the game character based on the operation signal of one of the front-side direction input section (1252) and the rear-side direction input section (1250), and controls a defense operation of the game character based on the operation signal of the other of the front-side direction input section (1252) and the rear-side direction input section (1250).

11. The program as defined in claim 1,
wherein the character control section controls movement and/or operation of the game character based on the operation signal of one of the front-side direction input section (1252) and the rear-side direction input section (1250), and
wherein the program causes the computer to further function as a command execution section which selects a command to be issued from a plurality of commands and executes the selected command based on the operation signal of the other of the front-side direction input section (1252) and the rear-side direction input section (1250).

12. The program as defined in any one of claims 1 to 11,
whereon the program causes the computer to function as:
a marker specific range detection section which detects that the pointer marker (2) has been positioned within a specific peripheral range of the game image.

13. The program as defined in claim 1, wherein the marker position camera control section changes the line-of-sight direction of the virtual camera from the center of the game image to the position of the pointer marker.

14. The program as defined in claim 1 or 13. wherein the marker position camera control section increases a change speed of the line-of-sight direction of the virtual camera as the pointer marker is positioned closer to an edge of the game image.

15. A game device (1200) which comprises a game controller (1230) and executes a game by controlling a game character (PC) disposed in a game space and an item (22) possessed by the game character (PC) and generating an image of the game space viewed from a virtual camera (CM), the image in use being displayed on a game screen (1222),
wherein the game controller (1230) has a specific shape held with both hands during use and comprises:
a barrel equivalent portion (1232);
a front-side holding section (1238) and a rear-side holding section (1236) respectively provided in a front portion and a rear portion of the game controller (1230), the front-side holding section (1238) being held with a right or left hand and the rear-side holding section (1236) being held with the other hand.
a trigger (1234) provided within a range in which the forefinger of the hand holding the rear-side holding section (1236) reaches the trigger (1234);
a front-side direction input section (1252) operated by a finger of the hand holding the front-side holding section (1238);
a rear-side direction input section (1250) operated by a finger of the hand holding the rear-side holding section (1236);
an operation signal output section (100) which outputs operation signals of the front-side direction input section (1252), the rear-side direction input section (1250), and the trigger (1234) corresponding to inputs performed using the front-side direction input section (1252), the rear-side direction input section (1250), and the trigger (1234), and
a detection mechanism which detects position coordinates on the game screen indicated by a barrel direction of the barrel equivalent portion (1232), the detection mechanism including an image detection section (1239), and
wherein the game device (1200) comprises:
a character control section (210) which controls the game character (PC) based on the operation signal of the front-side direction input section (1252) and/or the rear-side direction input section (1250) output from the game controller (1230);
a weapon actuation control section (200, S22) which controls actuation of the item (22) based on the operation signal of the trigger output from the game controller (1230);
a pointer marker display controls section (218) which displays a pointer marker (2) on the generated image of the game space and changes a display position of the pointer marker (2) based on the detection result oil the detection mechanism; and
a marker position camera control section (216) which controls a line-of-sight direction of the virtual camera (CM) when the pointer marker (2) has been positioned within a specific peripheral range of the game image.

16. A computer-readable storage medium storing the program as defined in any one of claims 1 to 14.

## Patentansprüche

1. Programm zum Bewirken, dass ein Computer (1201) einen in einem Spielbereich angeordneten Spielcharakter (PC) und ein Objekt (22) im Besitz des Spielcharakters (PC) steuert und ein Bild vom Spielbereich erzeugt, der von einer virtuellen Kamera (CM) angesehen wird, um einen Spielprozess zu steuern, wobei das genutzte Bild auf einem Spielbildschirm (1222) angezeigt wird, wobei der Computer (1201) über Kommunikation mit einer Spielsteuerung (1230) verbunden ist, die eine spezifische, während der Nutzung mit beiden Händen gehaltene Form aufweist und Folgendes enthält:
einen laufäquivalenten Abschnitt (1232);
einen Vorderseitenhalte-Teilabschnitt (1238) und einen Rückseitenhalte-Teilabschnitt (1236), die in einem Vorderabschnitt bzw. einem Hinterabschnitt der Spielsteuerung (1230) bereitgestellt sind, wobei der Vorderseitenhalte-Teilabschnitt (1238) mit einer rechten oder einer linken Hand gehalten wird und der Rückseitenhalte-Teilabschnitt (1236) mit der anderen Hand gehalten wird;
einen Abzug (1234), der innerhalb einer Region bereitgestellt ist, in welcher der den Rückseitenhalte-Teilabschnitt (1236) haltende Zeigefinger der Hand den Abzug (1234) erreicht;
einen Vorderseitenrichtungseingabe-Teilabschnitt (1252), der durch einen den Vorderseitenhalte-Teilabschnitt (1238) haltenden Finger der Hand bedient wird;
einen Rückseitenrichtungseingabe-Teilabschnitt (1250), der durch einen den Rückseitenhalte-Teilabschnitt (1236) haltenden Finger der Hand bedient wird;
einen Bediensignalausgabe-Teilabschnitt (100), der Bediensignale des Vorderseitenrichtungseingabe-Teilabschnitts (1252), des Rückseitenrichtungseingabe-Teilabschnitts (1250) und des Abzugs (1234) entsprechend Eingaben ausgibt, die unter Nutzung des Vorderseitenrichtungseingabe-Teilabschnitts (1252), des Rückseitenrichtungseingabe-Teilabschnitts (1250) und des Abzugs (1234) durchgeführt werden, und
einen Detektionsmechanismus, der Positionskoordinaten auf dem Spielbildschirm detektiert, die durch eine Laufrichtung des laufäquivalenten Abschnitts (1232) angegeben werden, wobei der Detektionsmechanismus einen Bilddetektions-Teilabschnitt (1239) enthält,
wobei das Programm bewirkt, dass der Computer als Folgendes fungiert:
Bediensignaleingabe-Teilabschnitt (270, 370), der die Kommunikation mit der Spielsteuerung (1230) steuert und in den das Bediensignal eingegeben wird;
Charaktersteuerungs-Teilabschnitt (210), der den Spielcharakter (PC) basierend auf dem Bediensignal des Vorderseitenrichtungseingabe-Teilabschnitts (1252) und/oder des Rückseitenrichtungseingabe-Teilabschnitts (1250) steuert;
Betätigungssteuerungs-Teilabschnitt (200, S22), der die Betätigung des Objekts (22) basierend auf dem Bediensignal des Abzugs (1234) steuert;
Zeigermarkierungsanzeigesteuerungs-Teilabschnitt (218), der eine Zeigermarkierung (2) auf dem erzeugten Bild vom Spielbereich anzeigt und eine Anzeigeposition der Zeigermarkierung (2) basierend auf dem Detektionsergebnis des Detektionsmechanismus verändert; und
Markierungspositionskamerasteuerungs-Teilabschnitt (216), der eine Sichtlinienrichtung der virtuellen Kamera (CM) steuert, wenn die Zeigermarkierung (2) innerhalb einer spezifischen Peripherieregion des Spielbilds positioniert worden ist.

2. Programm gemäß Anspruch 1,
wobei der Charaktersteuerungs-Teilabschnitt die Bewegung und/oder die Bedienung des Spielcharakters basierend auf dem Bediensignal einer der Komponenten Vorderseitenrichtungseingabe-Teilabschnitt (1252) und Rückseitenrichtungseingabe-Teilabschnitt (1250) steuert, und
wobei das Programm bewirkt, dass der Computer des Weiteren als Kamerasteuerungs-Teilabschnitt fungiert, der eine Sichtlinienrichtung und/oder einen Blickwinkel der virtuellen Kamera basierend auf dem Bediensignal der anderen der Komponenten Vorderseitenrichtungseingabe-Teilabschnitt (1252) und Rückseitenrichtungseingabe-Teilabschnitt (1250) steuert.

3. Programm gemäß Anspruch 1,
wobei der Charaktersteuerungs-Teilabschnitt die Bewegung und/oder die Bedienung des Spielcharakters basierend auf dem Bediensignal einer der Komponenten Vorderseitenrichtungseingabe-Teilabschnitt (1252) und Rückseitenrichtungseingabe-Teilabschnitt (1250) steuert, und
wobei das Programm bewirkt, dass der Computer des Weiteren als Steuerungszielauswahl-Teilabschnitt fungiert, der ein vom Betätigungssteuerungs-Teilabschnitt zu steuerndes Objekt aus einer Vielzahl von Objekten basierend auf dem Bediensignal der anderen der Komponenten Vorderseitenrichtungseingabe-Teilabschnitt (1252) und Rückseitenrichtungseingabe-Teilabschnitt (1250) auswählt.

4. Programm gemäß Anspruch 3,
wobei die Spielsteuerung (1230) des Weiteren eine spezifische Bedientaste enthält und der Bediensignalausgabe-Teilabschnitt ein Bediensignal der Bedientaste ausgibt, und
wobei der Steuerungszielauswahl-Teilabschnitt das Objekt basierend auf dem Bediensignal der anderen der Komponenten Vorderseitenrichtungseingabe-Teilabschnitt (1252) und Rückseitenrichtungseingabe-Teilabschnitt (1250) auswählt, wenn das Bediensignal der Bedientaste eingegeben wird.

5. Programm gemäß Anspruch 1,
wobei die Spielsteuerung des Weiteren eine spezifische Bedientaste enthält und der Bediensignalausgabe-Teilabschnitt ein Bediensignal der Bedientaste ausgibt,
wobei der Charaktersteuerungs-Teilabschnitt die Bewegung und/oder die Bedienung des Spielcharakters basierend auf dem Bediensignal einer der Komponenten Vorderseitenrichtungseingabe-Teilabschnitt (1252) und Rückseitenrichtungseingabe-Teilabschnitt (1250) steuert, und
wobei das Programm bewirkt, dass der Computer als Folgendes fungiert:
Steuerungszielauswahl-Teilabschnitt, der ein vom Betätigungssteuerungs-Teilabschnitt zu steuerndes Objekt aus einer Vielzahl von Objekten basierend auf dem Bediensignal der anderen der Komponenten Vorderseitenrichtungseingabe-Teilabschnitt (1252) und Rückseitenrichtungseingabe-Teilabschnitt (1250) auswählt, wenn das Bediensignal der Bedientaste eingegeben wird; und
Kamerasteuerungs-Teilabschnitt, der eine Sichtlinienrichtung und/oder einen Blickwinkel der virtuellen Kamera basierend auf dem Bediensignal der anderen der Komponenten Vorderseitenrichtungseingabe-Teilabschnitt (1252) und Rückseitenrichtungseingabe-Teilabschnitt (1250) steuert, wenn das Bediensignal der Bedientaste nicht eingegeben wird.

6. Programm gemäß Anspruch 1,
wobei die Spielsteuerung des Weiteren eine spezifische Bedientaste enthält und der Bediensignalausgabe-Teilabschnitt (100) ein Bediensignal der Bedientaste ausgibt,
wobei das Programm bewirkt, dass der Computer als Folgendes fungiert:
Kamerasteuerungs-Teilabschnitt, der eine Sichtlinienrichtung und/oder einen Blickwinkel der virtuellen Kamera basierend auf dem Bediensignal einer der Komponenten Vorderseitenrichtungseingabe-Teilabschnitt (1252) und Rückseitenrichtungseingabe-Teilabschnitt (1250) steuert; und
Steuerungszielauswahl-Teilabschnitt, der ein vom Betätigungssteuerungs-Teilabschnitt zu steuerndes Objekt aus einer Vielzahl von Objekten basierend auf dem Bediensignal der anderen der Komponenten Vorderseitenrichtungseingabe-Teilabschnitt (1252) und Rückseitenrichtungseingabe-Teilabschnitt (1250) auswählt, wenn das Bediensignal der Bedientaste eingegeben wird, und
wobei der Charaktersteuerungs-Teilabschnitt die Bewegung und/oder die Bedienung des Spielcharakters basierend auf dem Bediensignal der anderen der Komponenten Vorderseitenrichtungseingabe-Teilabschnitt (1252) und Rückseitenrichtungseingabe-Teilabschnitt (1250) steuert, wenn das Bediensignal der Bedientaste nicht eingegeben wird.

7. Programm gemäß Anspruch 1, wobei der Charaktersteuerungs-Teilabschnitt die Bewegung des Spielcharakters im Spielbereich in einer Aufwärts-/Abwärtsrichtung basierend auf dem Bediensignal einer der Komponenten Vorderseitenrichtungseingabe-Teilabschnitt (1252) und Rückseitenrichtungseingabe-Teilabschnitt (1250) steuert und die Bewegung des Spielcharakters im Spielbereich in einer Vorwärts-/Rückwärtsrichtung basierend auf dem Bediensignal der anderen der Komponenten Vorderseitenrichtungseingabe-Teilabschnitt (1252) und Rückseitenrichtungseingabe-Teilabschnitt (1250) steuert.

8. Programm gemäß Anspruch 1, wobei der Charaktersteuerungs-Teilabschnitt bewirkt, dass der Spielcharakter eine spezielle Bewegung, die eine spezifische Bedienung begleitet, basierend auf dem Bediensignal einer der Komponenten Vorderseitenrichtungseingabe-Teilabschnitt (1252) und Rückseitenrichtungseingabe-Teilabschnitt (1250) durchführt, und bewirkt, dass der Spielcharakter eine normale Bewegung, welche die spezifische Bedienung nicht begleitet, basierend auf dem Bediensignal der anderen der Komponenten Vorderseitenrichtungseingabe-Teilabschnitt (1252) und Rückseitenrichtungseingabe-Teilabschnitt (1250) durchführt.

9. Programm gemäß Anspruch 1,
wobei die Spielsteuerung (1230) des Weiteren eine spezifische Bedientaste enthält und der Bediensignalausgabe-Teilabschnitt (100) ein Bediensignal der Bedientaste ausgibt, und
wobei der Charaktersteuerungs-Teilabschnitt bewirkt, dass der Spielcharakter eine spezielle Bewegung, die eine spezifische Bedienung begleitet, basierend auf dem Bediensignal des Vorderseitenrichtungseingabe-Teilabschnitts (1252) und/oder des Rückseitenrichtungseingabe-Teilabschnitts (1250) durchführt, wenn das Bediensignal der Bedientaste eingegeben wird, und bewirkt, dass der Spielcharakter eine normale Bewegung, welche die spezifische Bedienung nicht begleitet, durchführt, wenn das Bediensignal der Bedientaste nicht eingegeben wird.

10. Programm gemäß Anspruch 1, wobei der Charaktersteuerungs-Teilabschnitt die Bewegung des Spielcharakters basierend auf dem Bediensignal einer der Komponenten Vorderseitenrichtungseingabe-Teilabschnitt (1252) und Rückseitenrichtungseingabe-Teilabschnitt (1250) steuert und eine Verteidigungsbedienung des Spielcharakters basierend auf dem Bediensignal der anderen der Komponenten Vorderseitenrichtungseingabe-Teilabschnitt (1252) und Rückseitenrichtungseingabe-Teilabschnitt (1250) steuert.

11. Programm gemäß Anspruch 1,
wobei der Charaktersteuerungs-Teilabschnitt die Bewegung und/oder die Bedienung des Spielcharakters basierend auf dem Bediensignal einer der Komponenten Vorderseitenrichtungseingabe-Teilabschnitt (1252) und Rückseitenrichtungseingabe-Teilabschnitt (1250) steuert, und
wobei das Programm bewirkt, dass der Computer des Weiteren als Befehlsausführungs-Teilabschnitt fungiert, der einen zu erteilenden Befehl aus einer Vielzahl von Befehlen auswählt und den ausgewählten Befehl basierend auf dem Bediensignal der anderen der Komponenten Vorderseitenrichtungseingabe-Teilabschnitt (1252) und Rückseitenrichtungseingabe-Teilabschnitt (1250) ausführt.

12. Programm gemäß einem der Ansprüche 1 bis 11,
wobei das Programm bewirkt, dass der Computer als Folgendes fungiert:
Teilabschnitt für Markierungsdetektion in einer spezifischen Region, der detektiert, dass die Zeigermarkierung (2) innerhalb einer spezifischen Peripherieregion des Spielbilds positioniert worden ist.

13. Programm gemäß Anspruch 1, wobei der Markierungspositionskamerasteuerungs-Teilabschnitt die Sichtlinienrichtung der virtuellen Kamera von der Mitte des Spielbilds zur Position der Zeigermarkierung verändert.

14. Programm gemäß Anspruch 1 oder 13, wobei der Markierungspositionskamerasteuerungs-Teilabschnitt eine Veränderungsgeschwindigkeit der Sichtlinienrichtung der virtuellen Kamera erhöht, wenn die Zeigermarkierung näher bei einem Rand des Spielbilds positioniert wird.

15. Spielvorrichtung (1200), die eine Spielsteuerung (1230) umfasst und ein Spiel ausführt, indem sie einen in einem Spielbereich angeordneten Spielcharakter (PC) und ein Objekt (22) im Besitz des Spielcharakters (PC) steuert und ein Bild vom Spielbereich erzeugt, der von einer virtuellen Kamera (CM) angesehen wird, wobei das genutzte Bild auf einem Spielbildschirm (1222) angezeigt wird,
wobei die Spielsteuerung (1230) eine spezifische, während der Nutzung mit beiden Händen gehaltene Form aufweist und Folgendes umfasst:
einen laufäquivalenten Abschnitt (1232);
einen Vorderseitenhalte-Teilabschnitt (1238) und einen Rückseitenhalte-Teilabschnitt (1236), die in einem Vorderabschnitt bzw. einem Hinterabschnitt der Spielsteuerung (1230) bereitgestellt sind, wobei der Vorderseitenhalte-Teilabschnitt (1238) mit einer rechten oder einer linken Hand gehalten wird und der Rückseitenhalte-Teilabschnitt (1236) mit der anderen Hand gehalten wird;
einen Abzug (1234), der innerhalb einer Region bereitgestellt ist, in welcher der den Rückseitenhalte-Teilabschnitt (1236) haltende Zeigefinger der Hand den Abzug (1234) erreicht;
einen Vorderseitenrichtungseingabe-Teilabschnitt (1252), der durch einen den Vorderseitenhalte-Teilabschnitt (1238) haltenden Finger der Hand bedient wird;
einen Rückseitenrichtungseingabe-Teilabschnitt (1250), der durch einen den Rückseitenhalte-Teilabschnitt (1236) haltenden Finger der Hand bedient wird;
einen Bediensignalausgabe-Teilabschnitt (100), der Bediensignale des Vorderseitenrichtungseingabe-Teilabschnitts (1252), des Rückseitenrichtungseingabe-Teilabschnitts (1250) und des Abzugs (1234) entsprechend Eingaben ausgibt, die unter Nutzung des Vorderseitenrichtungseingabe-Teilabschnitts (1252), des Rückseitenrichtungseingabe-Teilabschnitts (1250) und des Abzugs (1234) durchgeführt werden, und
einen Detektionsmechanismus, der Positionskoordinaten auf dem Spielbildschirm detektiert, die durch eine Laufrichtung des laufäquivalenten Abschnitts (1232) angegeben werden, wobei der Detektionsmechanismus einen Bilddetektions-Teilabschnitt (1239) enthält, und
wobei die Spielvorrichtung (1200) Folgendes umfasst:
einen Charaktersteuerungs-Teilabschnitt (210), der den Spielcharakter (PC) basierend auf dem von der Spielsteuerung (1230) ausgegebenen Bediensignal des Vorderseitenrichtungseingabe-Teilabschnitts (1252) und/oder des Rückseitenrichtungseingabe-Teilabschnitts (1250) steuert;
einen Waffenbetätigungssteuerungs-Teilabschnitt (200, S22), der die Betätigung des Objekts (22) basierend auf dem von der Spielsteuerung (1230) ausgegebenen Bediensignal des Abzugs steuert;
einen Zeigermarkierungsanzeigesteuerungs-Teilabschnitt (218), der eine Zeigermarkierung (2) auf dem erzeugten Bild vom Spielbereich anzeigt und eine Anzeigeposition der Zeigermarkierung (2) basierend auf dem Detektionsergebnis des Detektionsmechanismus verändert; und
einen Markierungspositionskamerasteuerungs-Teilabschnitt (216), der eine Sichtlinienrichtung der virtuellen Kamera (CM) steuert, wenn die Zeigermarkierung (2) innerhalb einer spezifischen Peripherieregion des Spielbilds positioniert worden ist.

16. Computerlesbares Speichermedium, welches das Programm gemäß einem der Ansprüche 1 bis 14 speichert.

## Revendications

1. Programme pour amener un ordinateur (1201) à commander un personnage de jeu (PC) disposé dans un espace de jeu et un élément (22) possédé par le personnage de jeu (PC) et générer une image de l'espace de jeu visualisée à partir d'une caméra virtuelle (CM) pour commander un procédé de jeu, l'image en utilisation étant affichée sur un écran de jeu (1222), l'ordinateur (1201) étant connecté via une communication avec une unité de commande de jeu (1230) qui a une forme spécifique pour être tenue avec les deux mains pendant l'utilisation et inclut :
une partie équivalente à un canon (1232) ;
une section de tenue côté avant (1238) et une section de tenue côté arrière (1236) respectivement placées dans une partie avant et une partie arrière de l'unité de commande de jeu (1230), la section de tenue côté avant (1238) étant tenue avec une main droite ou gauche et la section de tenue côté arrière (1236) étant tenue avec l'autre main ;
une gâchette (1234) placée dans une plage dans laquelle l'index de la main tenant la section de tenue côté arrière (1236) atteint la gâchette (1234) ;
une section d'entrée de direction côté avant (1252) actionnée par un doigt de la main tenant la section de tenue côté avant (1238) ;
une section d'entrée de direction côté arrière (1250) actionnée par un doigt de la main tenant la section de tenue côté arrière (1236) ;
une section de sortie de signal d'exploitation (100) qui fournit en sortie des signaux d'exploitation de la section d'entrée de direction côté avant (1252), la section d'entrée de direction côté arrière (1250) et la gâchette (1234) correspondant à des entrées réalisées en utilisant la section d'entrée de direction côté avant (1252), la section d'entrée de direction côté arrière (1250), et la gâchette (1234), et
un mécanisme de détection qui détecte des coordonnées de position sur l'écran de jeu indiquées par une direction de canon de la partie équivalente à un canon (1232), le mécanisme de détection incluant une section de détection d'image (1239),
le programme amenant l'ordinateur à fonctionner comme :
une section d'entrée de signal d'exploitation (270, 370) qui commande la communication avec l'unité de commande de jeu (1230) et dans laquelle le signal d'exploitation est entré ;
une section de commande de personnage (210) qui commande le personnage de jeu (PC) en se basant sur le signal d'exploitation de la section d'entrée de direction côté avant (1252) et/ou la section d'entrée de direction côté arrière (1250) ;
une section de commande d'actionnement (200, S22) qui commande l'actionnement de l'élément (22) en se basant sur le signal d'exploitation de la gâchette (1234) ;
une section de commande d'affichage de marqueur pointeur (218) qui affiche un marqueur pointeur (2) sur l'image générée de l'espace de jeu et change une position d'affichage du marqueur pointeur (2) en se basant sur le résultat de détection de mécanisme de détection ; et
une section de commande de caméra de position de marqueur (216) qui commande une direction de ligne de visée de la caméra virtuelle (CM) lorsque le marqueur pointeur (2) a été positionné dans une plage périphérique spécifique de l'image de jeu.

2. Programme selon la revendication 1,
dans lequel la section de commande de personnage commande le mouvement et/ou le déplacement du personnage de jeu en se basant sur le signal d'exploitation de l'une de la section d'entrée de direction côté avant (1252) et de la section d'entrée de direction côté arrière (1250), et
dans lequel le programme amène l'ordinateur à fonctionner en outre comme une section de commande de caméra qui commande une direction de ligne de visée et/ou un angle de champ de la caméra virtuelle en se basant sur le signal d'exploitation de l'autre de la section d'entrée de direction côté avant (1252) et de la section d'entrée de direction côté arrière (1250).

3. Programme selon la revendication 1,
dans lequel la section de commande de personnage commande le mouvement et/ou le déplacement du personnage de jeu en se basant sur le signal d'exploitation de l'une de la section d'entrée de direction côté avant (1252) et de la section d'entrée de direction côté arrière (1250), et
dans lequel le programme amène l'ordinateur à fonctionner en outre comme une section de sélection de cible de commande qui sélectionne un élément à commander par la section de commande d'actionnement à partir d'une pluralité d'éléments en se basant sur le signal d'exploitation de l'autre de la section d'entrée de direction côté avant (1252) et de la section d'entrée de direction côté arrière (1250).

4. Programme selon la revendication 3,
dans lequel l'unité de commande de jeu (1230) inclut en outre un bouton opérationnel spécifique, et la section de sortie de signal d'exploitation fournit en sortie un signal d'exploitation du bouton opérationnel, et
dans lequel la section de sélection de cible de commande sélectionne l'élément en se basant sur le signal d'exploitation de l'autre de la section d'entrée de direction côté avant (1252) et de la section d'entrée de direction côté arrière (1250) lorsque le signal d'exploitation du bouton opérationnel est entré.

5. Programme selon la revendication 1,
dans lequel l'unité de commande de jeu inclut en outre un bouton opérationnel spécifique, et la section de sortie de signal d'exploitation fournit en sortie un signal d'exploitation du bouton opérationnel,
dans lequel la section de commande de personnage commande le mouvement et/ou le déplacement du personnage de jeu en se basant sur le signal d'exploitation de l'une de la section d'entrée de direction côté avant (1252) et de la section d'entrée de direction côté arrière (1250), et
dans lequel le programme amène l'ordinateur à fonctionner comme :
une section de sélection de cible de commande qui sélectionne un élément à commander par la section de commande d'actionnement à partir d'une pluralité d'éléments en se basant sur le signal d'exploitation de l'autre de la section d'entrée de direction côté avant (1252) et de la section d'entrée de direction côté arrière (1250) lorsque le signal d'exploitation du bouton opérationnel est entré ; et
une section de commande de caméra qui commande une direction de ligne de visée et/ou un angle de champ de la caméra virtuelle en se basant sur le signal d'exploitation de l'autre de la section d'entrée de direction côté avant (1252) et de la section d'entrée de direction côté arrière (1250) lorsque le signal d'exploitation du bouton opérationnel n'est pas entré.

6. Programme selon la revendication 1,
dans lequel l'unité de commande de jeu inclut en outre un bouton opérationnel spécifique, et la section de sortie de signal d'exploitation (100) fournit en sortie un signal d'exploitation du bouton opérationnel,
dans lequel le programme amène l'ordinateur à fonctionner comme :
une section de commande de caméra qui commande une direction de ligne de visée et/ou un angle de champ de la caméra virtuelle en se basant sur le signal d'exploitation de l'une de la section d'entrée de direction côté avant (1252) et de la section d'entrée de direction côté arrière (1250) ; et
une section de sélection de cible de commande qui sélectionne un élément à commander par la section de commande d'actionnement à partir d'une pluralité d'éléments en se basant sur le signal d'exploitation de l'autre de la section d'entrée de direction côté avant (1252) et de la section d'entrée de direction côté arrière (1250) lorsque le signal d'exploitation du bouton opérationnel est entré, et
dans lequel la section de commande de personnage commande le mouvement et/ou le déplacement du personnage de jeu en se basant sur le signal d'exploitation de l'autre de la section d'entrée de direction côté avant (1252) et de la section d'entrée de direction côté arrière (1250) lorsque le signal d'exploitation du bouton opérationnel n'est pas entré.

7. Programme selon la revendication 1, dans lequel la section de commande de personnage commande le mouvement du personnage de jeu dans l'espace de jeu dans une direction vers le haut/vers le bas en se basant sur le signal d'exploitation de l'une de la section d'entrée de direction côté avant (1252) et de la section d'entrée de direction côté arrière (1250), et commande le mouvement du personnage de jeu dans l'espace de jeu dans une direction vers l'avant/vers l'arrière en se basant sur le signal d'exploitation de l'autre de la section d'entrée de direction côté avant (1252) et de la section d'entrée de direction côté arrière (1250).

8. Programme selon la revendication 1, dans lequel la section de commande de personnage amène le personnage de jeu à réaliser un mouvement spécial accompagnant une exploitation spécifique basée sur le signal d'exploitation de l'une de la section d'entrée de direction côté avant (1252) et de la section d'entrée de direction côté arrière (1250), et amène le personnage de jeu à réaliser un mouvement normal qui n'accompagne pas l'exploitation spécifique en se basant sur le signal d'exploitation de l'autre de la section d'entrée de direction côté avant (1252) et de la section d'entrée de direction côté arrière (1250).

9. Programme selon la revendication 1,
dans lequel l'unité de commande de jeu (1230) inclut en outre un bouton opérationnel spécifique, et la section de sortie de signal d'exploitation (100) fournit en sortie un signal d'exploitation du bouton opérationnel, et
dans lequel la section de commande de personnage amène le personnage de jeu à réaliser un mouvement spécial accompagnant une exploitation spécifique en se basant sur le signal d'exploitation de la section d'entrée de direction côté avant (1252) et/ou de la section d'entrée de direction côté arrière (1250) lorsque le signal d'exploitation du bouton opérationnel est entré, et amène le personnage de jeu à réaliser un mouvement normal qui n'accompagne pas l'exploitation spécifique lorsque le signal d'exploitation du bouton opérationnel n'est pas entré.

10. Programme selon la revendication 1, dans lequel la section de commande de personnage commande le mouvement du personnage de jeu en se basant sur le signal d'exploitation de l'une de la section d'entrée de direction côté avant (1252) et de la section d'entrée de direction côté arrière (1250), et commande une exploitation de défense du personnage de jeu en se basant sur le signal d'exploitation de l'autre de la section d'entrée de direction côté avant (1252) et de la section d'entrée de direction côté arrière (1250).

11. Programme selon la revendication 1,
dans lequel la section de commande de personnage commande le mouvement et/ou l'exploitation du personnage de jeu en se basant sur le signal d'exploitation de l'une de la section d'entrée de direction côté avant (1252) et de la section d'entrée de direction côté arrière (1250), et
dans lequel le programme amène l'ordinateur à fonctionner en outre comme une section d'exécution d'ordre qui sélectionne un ordre à émettre parmi une pluralité d'ordres et exécute l'ordre sélectionné en se basant sur le signal d'exploitation de l'autre de la section d'entrée de direction côté avant (1252) et de la section d'entrée de direction côté arrière (1250).

12. Programme selon l'une quelconque des revendications 1 à 11,
dans lequel le programme amène l'ordinateur à fonctionner comme :
une section de détection de plage spécifique au marqueur qui détecte que le marqueur pointeur (2) a été positionné dans une plage périphérique spécifique de l'image de jeu.

13. Programme selon la revendication 1, dans lequel la section de commande de caméra de position de marqueur change la direction de ligne de visée de la caméra virtuelle du centre de l'image de jeu à la position du marqueur pointeur.

14. Programme selon la revendication 1 ou 13, dans lequel la section de commande de caméra de position de marqueur augmente une vitesse de changement de la direction de ligne de visée de la caméra virtuelle à mesure que le marqueur pointeur est rapproché d'un bord de l'image de jeu.

15. Dispositif de jeu (1200) qui comprend une unité de commande de jeu (1230) et exécute un jeu en commandant un personnage de jeu (PC) disposé dans un espace de jeu et un élément (22) possédé par le personnage de jeu (PC) et générant une image de l'espace de jeu visualisée à partir d'une caméra virtuelle (CM), l'image en utilisation étant affichée sur un écran de jeu (1222),
dans lequel l'unité de commande de jeu (1230) a une forme spécifique pour être tenue avec les deux mains pendant l'utilisation et comprend :
une partie équivalente à un canon (1232) ;
une section de tenue côté avant (1238) et une section de tenue côté arrière (1236) respectivement placées dans une partie avant et une partie arrière de l'unité de commande de jeu (1230), la section de tenue côté avant (1238) étant tenue avec une main droite ou gauche et la section de tenue côté arrière (1236) étant tenue avec l'autre main ;
une gâchette (1234) placée dans une plage dans laquelle l'index de la main tenant la section de tenue côté arrière (1236) atteint la gâchette (1234) ;
une section d'entrée de direction côté avant (1252) actionnée par un doigt de la main tenant la section de tenue côté avant (1238) ;
une section d'entrée de direction côté arrière (1250) actionnée par un doigt de la main tenant la section de tenue côté arrière (1236) ;
une section de sortie de signal d'exploitation (100) qui fournit en sortie des signaux d'exploitation de la section d'entrée de direction côté avant (1252), la section d'entrée de direction côté arrière (1250) et la gâchette (1234) correspondant à des entrées réalisées en utilisant la section d'entrée de direction côté avant (1252), la section d'entrée de direction côté arrière (1250), et la gâchette (1234), et
un mécanisme de détection qui détecte des coordonnées de position sur l'écran de jeu indiquées par une direction de canon de la partie équivalente à un canon (1232), le mécanisme de détection incluant une section de détection d'image (1239), et
dans lequel le dispositif de jeu (1200) comprend :
une section de commande de personnage (210) qui commande le personnage de jeu (PC) en se basant sur le signal d'exploitation de la section d'entrée de direction côté avant (1252) et/ou la section d'entrée de direction côté arrière (1250) fourni en sortie par l'unité de jeu (1230) ;
une section de commande d'actionnement d'arme (200, S22) qui commande l'actionnement de l'élément (22) en se basant sur le signal d'exploitation de la gâchette fourni en sortie par l'unité de commande de jeu (1230) ;
une section de commande d'affichage de marqueur pointeur (218) qui affiche un marqueur pointeur (2) sur l'image générée de l'espace de jeu et change une position d'affichage du marqueur pointeur (2) en se basant sur le résultat de détection du mécanisme de détection ; et
une section de commande de caméra de position de marqueur (216) qui commande une direction de ligne de visée de la caméra virtuelle (CM) lorsque le marqueur pointeur (2) a été positionné dans une plage périphérique spécifique de l'image de jeu.

16. Support de stockage lisible par ordinateur stockant le programme tel que défini dans l'une quelconque des revendications 1 à 14.
